(19) Europäisches Patentamt / European Patent Office / Office européen des brevets

(11) **EP 4 694 113 A1**

(12) **EUROPEAN PATENT APPLICATION**
published in accordance with Art. 153(4) EPC

(43) Date of publication:
**11.02.2026  Bulletin 2026/07**

(21) Application number: **24779696.4**

(22) Date of filing: **19.03.2024**

(51) International Patent Classification (IPC):
*H04N 13/368* (2018.01)   *G02B 30/27* (2020.01)
*G02B 30/30* (2020.01)   *H04N 13/31* (2018.01)
*H04N 13/305* (2018.01)   *H04N 13/356* (2018.01)

(52) Cooperative Patent Classification (CPC):
**G02B 30/27; G02B 30/30; H04N 13/305;
H04N 13/31; H04N 13/356; H04N 13/368**

(86) International application number:
**PCT/JP2024/010657**

(87) International publication number:
**WO 2024/203571 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.03.2023  JP 2023050811**

(71) Applicant: **Sony Group Corporation
Tokyo 108-0075 (JP)**

(72) Inventors:
• **TAKAHASHI, Noriaki
  Tokyo 108-0075 (JP)**
• **KOBAYASHI, Yuto
  Tokyo 108-0075 (JP)**

(74) Representative: **D Young & Co LLP
3 Noble Street
London EC2V 7BQ (GB)**

(54)  **DISPLAY DEVICE**

(57)    A display apparatus includes a display, a processor, a user separation layer, and a left and right image separation layer. The processor obtains, from an output of a sensor that obtains position information in a real space, user position information including position information of a first user, generates an image for a right eye of the first user and an image for a left eye of the first user on the basis of the position information of the first user, generates an image for a second user, which is targeting the second user different from the first user, and controls the display to display a display image including the image for the right eye of the first user, the image for the left eye of the first user, and an image for the second user. The user separation layer is relatively fixed with respect to a surface of the display and separates the display image into a viewpoint of the first user and a viewpoint of the second user. The left and right image separation layer is relatively fixed with respect to the surface of the display and separates the display image into an image for a right eye and an image for a left eye.

EP 4 694 113 A1

FIG.3

**Description**

Technical Field

The present technology relates to a display apparatus that can be applied to stereoscopic display by means of binocular stereoscopic vision.

Background Art

Conventionally, there is known a technology of performing stereoscopic display by means of binocular stereoscopic vision. The binocular stereoscopic vision is a technology that realizes stereoscopic vision by displaying an image with a parallax to the right eye and the left eye of a user. In recent years, a display apparatus capable of stereoscopic vision with bare eyes by directly displaying an image with a parallax to the right eye and the left eye without using dedicated eyeglasses and the like has attracted attention.

Patent Literature 1 has described a display that enables a plurality of viewers to simultaneously view two-dimensional and/or three-dimensional image data from a plurality of viewpoints. In this display, a high-refractive index optical volume is provided above a structure (lenticular lens, etc.) that generates a view depending on an angle. Accordingly, the perception that the image is popping out of the screen is enhanced, and it is possible to separate the on-axis image and off-axis image for each viewer (Paragraphs [0009], [0010], and [0028] in the specification, Figs. 1 and 7, etc. in Patent Literature 1).

Patent Literature 2 has described a bare eyes stereoscopic display apparatus that provides a plurality of different perspective views in different directions. In this apparatus, for example, nine different views are displayed, and a viewer who perceives two consecutive views among them experiences a three-dimensional effect. It should be noted that a plurality of different views are periodically repeated around the display. In view of this, the distance and speed of the viewer are detected, and the number and order of views are changed in accordance with the detection results. Accordingly, for example, crosstalk, image blurring, reverse viewing, and the like are suppressed (Paragraphs [0037], [0048], [0057], [0067], and [0073] in the specification, Figs. 7 to 9, etc. in Patent Literature 2).

Patent Literature 3 has described a stereoscopic display that displays a plurality of viewpoint images. In this stereoscopic display, the positions of a plurality of users are detected, and target viewing fields are calculated for each user to view three-dimensional images normally on the basis of the detection results. Moreover, the display order of the viewpoint images is selected so that the viewing field when a plurality of viewpoint images are displayed is closest to the target viewing field. Accordingly, the number of viewers within the viewing field is maximized, enabling a comfortable viewing environment for a stereoscopic video to be provided (Paragraphs [0026], [0040], [0043], and [0047] in the specification, Fig. 6, Fig. 7, etc. in Patent Literature 1).

Citation List

Patent Literature

Patent Literature 1: Japanese Unexamined Patent Application Publication No. 2021-516517
Patent Literature 2: Japanese Unexamined Patent Application Publication No. 2015-515165
Patent Literature 3: Japanese Patent Application Laid-open No. 2012-10086

Disclosure of Invention

Technical Problem

Stereoscopic display by binocular stereoscopic vision is expected to be applied in various fields such as entertainment, education, and medical care. Moreover, the range of applications is expected to expand by allowing a plurality of users to share the contents of the stereoscopic display simultaneously. On the other hand, depending on the method of displaying images that realize stereoscopic vision, the resolution may be reduced. Therefore, it is desirable to provide a technology that enables a plurality of users to simultaneously view a high-resolution image including binocular stereoscopic vision.

In view of the above-mentioned circumstances, it is an objective of the present technology to provide a display apparatus that enables a plurality of users to simultaneously view a high-resolution image including binocular stereoscopic vision.

Solution to Problem

In order to accomplish the above-mentioned objective, a display apparatus according to an embodiment of the present technology includes a display, a processor, a user separation layer, and a left and right image separation layer. The processor is configured to obtain, from an output of a sensor configured to obtain position information in a real space, user position information including position information of a first user, generate an image for a right eye of the first user and an image for a left eye of the first user on the basis of the position information of the first user, generate an image for a second user, which is targeting the second user different from the first user, and control the display to display a display image including the image for the right eye of the first user, the image for the left eye of the first user, and an image for the second user. The user separation layer is relatively fixed with respect to a surface of the display and is configured to separate the display image into a viewpoint of the first user and a viewpoint of the second user. The left and right image separation layer is relatively fixed with respect to the surface of the display and is configured to separate the display image into an image for a right eye and an image for a left eye.

In this display apparatus, the display image including the image for the right eye and the image for the left eye of the first user generated on the basis of the position information of the first user and the image for the second user, which is targeting the second user, are displayed on the display. Moreover, the display image is separated into the viewpoint of the first user and the viewpoint of the second user by the user separation layer and is separated into the image for the right eye and the image for the left eye by the left and right image separation layer. With these two layers, it is possible to assign and display the image on the display to a plurality of users including the first user and the second user without waste. As a result, it is possible to simultaneously provide a high-resolution image including binocular stereoscopic vision to the plurality of users.

Brief Description of Drawings

[Fig. 1] A schematic view showing an example of a first display apparatus according to an embodiment of the present technology.

[Fig. 2] A schematic diagram showing a functional configuration example of the first display apparatus.

[Fig. 3] A schematic diagram showing a configuration example of a display unit of the first display apparatus.

[Fig. 4] A schematic diagram showing an example of light beam control by a both-eye separation layer.

[Fig. 5] A schematic diagram showing an example of light beam control by a viewer separation layer.

[Fig. 6] A schematic diagram describing light beam control by the first display apparatus.

[Fig. 7] A schematic diagram showing a configuration example of a display unit of a display apparatus for one person.

[Fig. 8] A block diagram showing a configuration example of a processor of the display apparatus for one person.

[Fig. 9] A schematic diagram showing an example of stereoscopic display by the display apparatus for one person.

[Fig. 10] A schematic diagram showing an example of stereoscopic display by the display apparatus for one person.

[Fig. 11] A flowchart showing an operation example of the display apparatus for one person.

[Fig. 12] A block diagram showing a configuration example of a processor of the first display apparatus.

[Fig. 13] A schematic diagram showing an example of stereoscopic display by the first display apparatus.

[Fig. 14] A flowchart showing an operation example of the processor.

[Fig. 15] A schematic diagram showing parameters of a both-eye separation layer and a viewer separation layer.

[Fig. 16] A schematic diagram showing another arrangement example of a light beam control layer.

[Fig. 17] A schematic diagram showing an arrangement example of the both-eye separation layer and the viewer separation layer with respect to a see-through-type display.

[Fig. 18] A schematic diagram showing another configuration example of the viewer separation layer.

[Fig. 19] A schematic diagram showing an arrangement example of the both-eye separation layer and the viewer separation layer with respect to a self-light transmissive-type display.

[Fig. 20] A schematic diagram showing an example of stripe patterns of the both-eye separation layer and the viewer separation layer.

[Fig. 21] A schematic diagram showing an application example of the viewer separation layer capable of controlling the stripe patterns.

[Fig. 22] A schematic diagram showing another application example of the viewer separation layer capable of controlling the stripe patterns.

[Fig. 23] A schematic diagram describing light beam control on a second display mode.

[Fig. 24] A flowchart showing an operation example of the processor on the second display mode.

[Fig. 25] A schematic diagram describing image display by a display apparatus for one person shown as a comparative example.

[Fig. 26] A schematic diagram describing image display by a multi-view-type display apparatus shown as a comparative example.

Mode(s) for Carrying Out the Invention

Hereinafter, embodiments according to the present technology will be described with reference to the drawings.

[Configuration of First Display Apparatus]

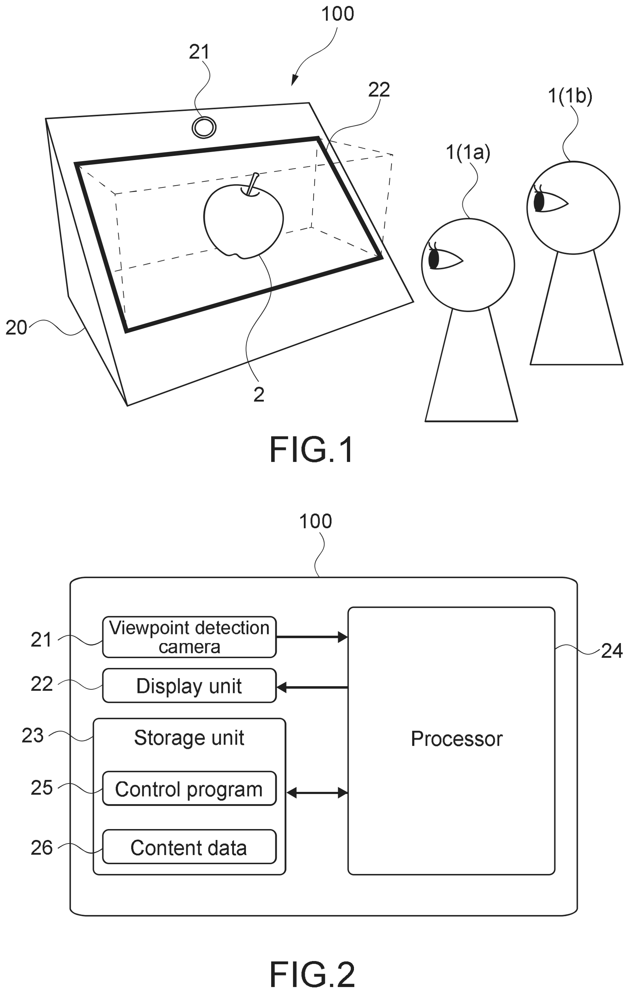

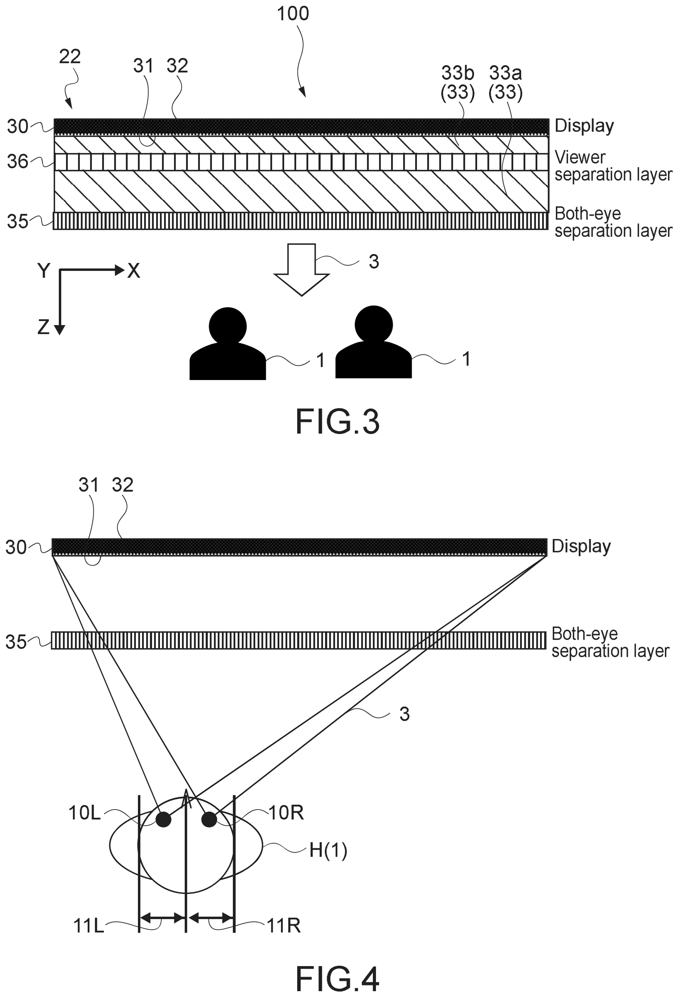

Fig. 1 is a schematic view showing an example of a first display apparatus according to an embodiment of the present technology. A first display apparatus 100 is an apparatus that performs stereoscopic display with respect to a plurality of users 1.
The first display apparatus 100 is configured as a line-of-sight detection-type light field display (LFD). For example, the first display apparatus 100 detects the positions of the plurality of users 1 and generates an image for the right eye and an image for the left eye adapted for the position of each user 1. The image for the right eye and the image for the left eye are a pair of parallax images to which a parallax depending on the positions of the left eye and the right eye of the user 1. Thus, the first display apparatus 100 generates a pair of parallax images for each of the plurality of users 1.
Also, the first display apparatus 100 respectively displays a corresponding image for the right eye toward the right eye of each user 1 and respectively displays a corresponding image for the left eye toward the left eye of each user 1. Accordingly, the plurality of users 1 is capable of perceiving a three-dimensional image 2 by binocular stereoscopic vision with bare eyes. Moreover, the three-dimensional image 2 perceived by each user 1 is, for example, an image as viewed from a viewing position of each user 1.
In the example shown in Fig. 1, an 3D object representing an apple is displayed to two users 1. In this case, the first display apparatus 100 displays an image for the right eye and an image for the left eye in which the apple has been drawn toward each of the two users 1. As a result, the two users 1 become capable of perceiving the three-dimensional image 2 of the 3D object representing the apple as viewed from each viewing position of each user 1.
It should be noted that it is assumed that the image in the present disclosure includes a still image and a moving image (video) that changes over time. Thus, for example, the image for the right eye and the image for the left eye can also be expressed as a right-eye video and a left-eye video. Moreover, the three-dimensional image can also be expressed as a stereoscopic video.
The first display apparatus 100 includes a casing portion 20, a viewpoint detection camera 21, and a display unit 22. The casing portion 20 is a casing that houses the respective units of the first display apparatus 100 and is placed on a table or the like when it is used. The casing portion 20 is provided with a tilt surface inclined with respect to a surface where it is placed. The tilt surface of the casing portion 20 is a surface facing the user 1 in the first display apparatus 100 and is provided with the viewpoint detection camera 21 and the display unit 22. It should be noted that the shape of the casing portion 20 is not limited. For example, the casing portion 20 in a rectangular parallelepiped shape with no tilt surface may be used.
The viewpoint detection camera 21 is an imaging element that images the face of the observer 1 who observes the display panel 23. The viewpoint detection camera 21 functions as a sensor that obtains position information in the real space. Here, a captured image obtained by imaging the face of the user 1 is obtained as the position information in the real space. The captured image is, for example, information indicating the position of the viewpoint of the user 1 in the real space. For example, the viewpoint detection camera 21 is suitably arranged at such a position that the viewpoint detection camera 21 can image the face of the user 1. In Fig. 1, the viewpoint detection camera 21 is arranged at a position on the tilt surface of the casing portion 20 above the center of the display unit 22.
As the viewpoint detection camera 21, a digital camera including an image sensor such as a complementary metal-oxide semiconductor (CMOS) sensor or a charge coupled device (CCD) sensor may be used. The specific configuration of the viewpoint detection camera 21 is not limited, and for example, a multi-eye camera such as a stereo camera may be used. Moreover, an infrared camera that radiates infrared light and takes infrared images, a ToF camera that functions as a distance measuring sensor, or the like may be used as the viewpoint detection camera 21.
The display unit 22 is a display unit that displays the image for the right eye and the image for the left eye to the plurality of users 1. The display unit 22 is configured to be capable of displaying the corresponding image for the right eye and the corresponding image for the left eye to the right eye and the left eye of each user 1. The display unit 22 is, for example, a rectangular panel in plan view and is arranged along the tilt surface of the casing portion 20. By arranging the display unit 22 in an inclined state in this manner, the plurality of users 1 is capable of observing a 3D object stereoscopically displayed from a horizontal direction and a perpendicular direction, for example. It should be noted that the display unit 22 does not necessarily need to be arranged obliquely, and may be arranged in any attitude as long as the display unit 22 enables the user 1 to visually recognize the image. The specific configuration of the display unit 22 will be described later with reference to Fig. 3.

Fig. 2 is a schematic diagram showing a functional configuration example of the first display apparatus 100. The first display apparatus 100 further includes a storage unit 23 and a processor 24.

The storage unit 23 is a nonvolatile storage device, and for example, a solid state drive (SSD) or a hard disk drive (HDD) is used. A control program 25 and content data 26 are stored in the storage unit 23. The control program 25 is a program that controls general operations of the first display apparatus 100. The content data 26 is data about content including the 3D object and the like. Information about a three-dimensional shape, a surface color, a lighting direction, an operation, and the like of the 3D object is recorded as the content data 26. In the present embodiment, the storage unit 23 corresponds to a computer-readable recording medium recording a program. Moreover, the control program 25 corresponds to a program recorded on a recording medium.

The processor 24 is an information processing apparatus that controls a comprehensive operation of the first display apparatus 100. The processor 24 has a hardware configuration necessary for a computer, for example, a CPU and memories (RAM, ROM). Various types of processing are executed by the CPU loading and executing the control program 25 stored in the storage unit 23 to the RAM.

For example, a programmable logic device (PLD) such as a field programmable gate array (FPGA) and other devices such as an application specific integrated circuit (ASIC) may be used as the processor 24. Moreover, for example, a graphics processing unit (GPU) may be used as the information processing apparatus 40.

The processor 24 obtains user position information including the position information of the user 1 from the output (captured image) of the viewpoint detection camera 21. Here, the position information of the user 1 is, for example, information representing the position of the user 1 in a real space and is typically a position (right-eye coordinates) of the right eye of the user 1 and a position (left-eye coordinates) of the left eye of the user 1. The processor 24 obtains necessary position information of the user 1 of the plurality of users 1 as the user position information.

Also, the processor 24 generates a plurality of images for displaying toward the plurality of users 1 who uses the first display apparatus 100. These images are display images to be displayed on a display 30 of the display unit 22 to be described later.

Hereinafter, it is assumed that a first user 1a and a second user 1b different from the first user 1a use the first display apparatus 100. For example, it is assumed that one of the two users 1 shown in Fig. 1 is the first user 1a and the other is the second user 1b. It should be noted that the present technology can also be applied to a case where the number of users 1 is three or more.

The processor 24 obtains user position information including the position information of the first user 1a from the output of the viewpoint detection camera 21. Moreover, the processor 24 generates the image for the right eye of the first user 1a and the image for the left eye of the first user 1a on the basis of the position information of the first user 1a. These images are parallax images that allow the first user 1a to stereoscopically perceive the 3D object as viewed from the position of the first user 1a.

Also, the processor 24 generates an image for the second user which is targeting the second user 1b. The image for the second user is an image to be displayed to the second user 1b who is viewing the first display apparatus 100 from a position different from the first user 1a.

In the present embodiment, stereoscopic display by binocular stereoscopic vision is performed to the second user 1b as well as the first user 1a. Therefore, parallax images (the image for the right eye and the image for the left eye) to be displayed to the second user 1b are generated as the image for the second user. Specifically, the processor 24 obtains position information of the second user 1b from the output of the viewpoint detection camera 21. Moreover, on the basis of the position information of the second user 1b, the processor 24 generates an image for a right eye of the second user 1b and an image for a left eye of the second user 1b as the image for the second user.

The processor 24 controls the display 30 to display a display image including the image for the right eye of the first user 1a, the image for the left eye of the first user 1ab, and the image for the second user. Here, the display image is an image group consisting of the plurality of images. Moreover, the processing of controlling the display 30 to display the display image on the display 30 is, for example, processing of combining images included in the display image and displaying a composite image on the display 30.

As described above, in the present embodiment, the image for the right eye of the second user 1b and the image for the left eye of the second user 1b are generated as the image for the second user. Thus, the display image to be displayed on the display 30 by the processor 24 includes two pairs of parallax images (the image for the right eye of the first user 1a, the image for the left eye of the first user 1a, the image for the right eye of the second user 1b, and the image for the left eye of the second user 1b).

The respective images included in the display image are combined so that they can be visually recognized from the corresponding eye (right eye or left eye) of the user 1, and the composite image is displayed on the display 30. When combining the images, the position information of each user 1 is used.

In this manner, the processor 24 generates the image for the right eye and the image for the left eye of each user 1 in accordance with the positions of the plurality of users 1 (the first user 1a and the second user 1b). Then, the image to be displayed on the display 30 is controlled in accordance with the positions of the plurality of users 1.

Fig. 3 is a schematic diagram showing a configuration example of the display unit 22 of the first display apparatus 100. Fig. 3 schematically shows an example of a cross-sectional view of the display unit 22. The display unit 22 includes the display 30, a both-eye separation layer 35, and a viewer separation layer 36. The both-eye separation layer 35 and the viewer separation layer 36 are light beam control layers that control a direction (light beam direction) of image light emitted from the display 30. Moreover, the both-eye separation layer 35 and the viewer separation layer 36 function as viewpoint separation layers that each control the light beam direction, thereby separating viewpoints that the image light reaches. Thus, it can also be said that the display unit 22 is a display unit including the display 30 and multiple viewpoint separation layers.

The display 30 is a display element that displays the image and includes a display screen 31, a back surface 32, and a plurality of pixels. The display screen 31 and the back surface 32 are flat surfaces and the display 30 is configured as a flat panel display. It should be noted that in Fig. 3, the illustration of the plurality of pixels is omitted.

The display screen 31 is a surface on which the image is displayed. Image light that constitutes the image is emitted from the display screen 31. The back surface 32 is a surface on a side opposite to the display screen 31. The display screen 31 and the back surface 32 are typically rectangular. Although the display 30 with the horizontally long display screen 31 is used in the first display apparatus 100, for example, the display 30 with the vertically long display screen 31 or the square display screen 31 may be used. In addition, the shape of the display screen 31, the number of pixels, and the like are not limited.

The plurality of pixels is arranged in a grid form along the vertical direction and the horizontal direction of the display screen 31. Each pixel provided on the display 30 corresponds to each pixel constituting the image. Moreover, the plurality of pixels each emits the image light in color and with intensity specified by the image data.

The vertical direction and the horizontal direction of the display screen 31 are directions orthogonal to each other in the display screen 31, and are, for example, directions that are the upper and lower directions and the left and right directions as viewed from the user 1. Hereinafter, the horizontal direction of the display screen 31 will be referred to as an X-axis direction and the vertical direction of the display screen 31 will be referred to as a Y-axis direction. Moreover, a direction orthogonal to the display screen 31 (XY-plane) will be referred to as a Z-axis direction. The Z-axis direction is a depth direction as viewed from the display screen 31. It should be noted that a cross-sectional view shown in Fig. 3 is a schematic diagram showing a cross-section of the display unit 22, which is taken along the XZ plane.

A see-through-type display that modulates the light from a backlight is used as the display 30. In this case, the display 30 is constituted by a display element such as a liquid crystal display (LCD) panel. Moreover, the backlight is provided on a side opposite to the display screen 31 (on the side of the back surface 32 of the display 30). It should be noted that in Fig. 3, the backlight is not shown.

Also, for example, a self-light-emitting-type display that emits light from the display screen 31 may be used as the display 30. In this case, the display 30 is constituted by a display element such as a display panel using organic light-emitting diode (OLED) and another light-emitting diode (LED) element, a plasma display panel (PDP), and the like. Moreover, it is unnecessary to provide the backlight in the self-light transmissive-type display 30.

Fig. 4 is a schematic diagram showing an example of light beam control by the both-eye separation layer 35. Fig. 4 schematically shows a configuration in which only the display 30 and the both-eye separation layer 35 of the display unit 22 are arranged for describing the control of the light beam (image light 3) by the both-eye separation layer 35.

The both-eye separation layer 35 is an optical element that controls the light beam direction of the image light 3, is relatively fixed with respect to the surface of the display 30, and is configured to separate the display image into the image for the right eye and the image for the left eye. Here, the surface of the display 30 to which the both-eye separation layer 35 is fixed is the display screen 31 or the back surface 32 of the display 30. In the present embodiment, the both-eye separation layer 35 corresponds to a left and right image separation layer.

Separating the display image into the image for the right eye and the image for the left eye is, for example, separating the image displayed on the display 30 (display screen 31) into an image seen by one human H (user 1) with a right eye 10R and an image seen with a left eye 10L. For example, as shown in Fig. 4, the both-eye separation layer 35 controls the direction (light beam direction) of the image light 3 emitted from the display screen 31, guides the image light 3 output from some pixels to the right eye 10R of the human H, and guides the image light 3 output from the other pixels to the left eye 10L of the human H.

It should be noted that the image for the right eye and the image for the left eye set forth herein refer to images separated in such a manner that the image light 3 emitted from the display 30 passes the both-eye separation layer 35, and do not refer to parallax images targeting the particular user 1.

It can also be said that separating the image to be displayed on the display 30 into the images to be viewed by the right eye 10R and the left eye 10L of the human H is dividing viewing fields of the right eye 10R and the left eye 10L of the human H. Here, the viewing field is a region in which the user 1 can suitably visually recognize the image to be displayed on the display 30. The viewing field depends on, for example, a design value of the light beam control layer (here, the both-eye separation layer 35), a method of displaying an image by the display 30, and the like.

For example, a viewing field (angle range) that enables suitable visual recognition of a two-dimensional image is set to the single display 30. The both-eye separation layer 35 is an element that divides such a viewing field of the display 30 into a viewing field 11R of the right eye 10R in which the user can suitably visually recognize the image for the right eye and a viewing field 11L of the left eye 10L in which the user can suitably visually recognize the image for the left eye. In Fig. 4, the viewing field 11R and the viewing field 11L are schematically shown by using the black arrows.

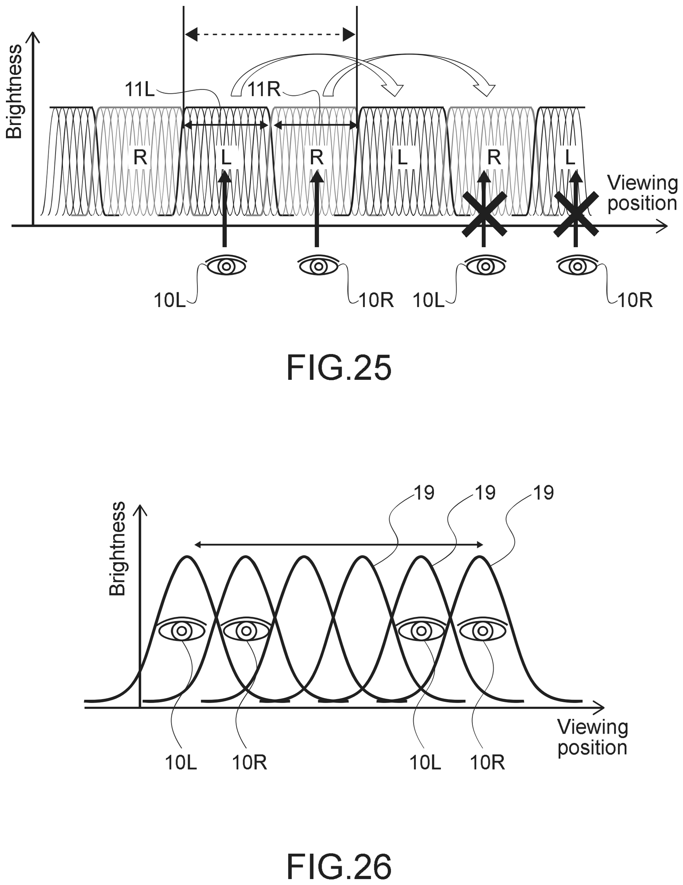

The configuration and arrangement position of the both-eye separation layer 35 are set, for example, on the basis of a center interval (pupillary distance, etc.) of the right eye 10R and the left eye 10L of a general human H. In this case, as will be described later, the viewing field 11R and the viewing field 11L are alternately repeatedly generated in the horizontal direction (X-axis direction) (see Fig. 25, etc.). It should be noted that the configuration and arrangement position of the both-eye separation layer 35 are different from a multi-view-type element that separates the image on the display 30 into three or more types of images, for example.

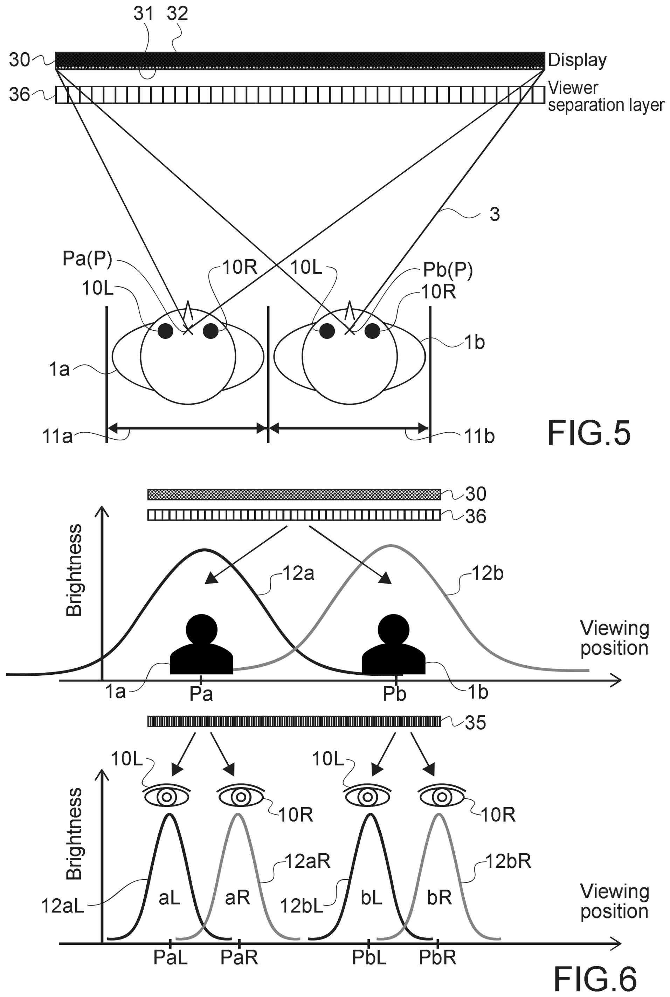

Fig. 5 is a schematic diagram showing an example of light beam control by the viewer separation layer 36. Fig. 5 schematically shows a configuration in which only the display 30 and the viewer separation layer 36 of the display unit 22 are arranged for describing the control of the light beam (image light 3) by the viewer separation layer 36.

The viewer separation layer 36 is an optical element that controls the light beam direction of the image light 3, is relatively fixed with respect to the surface of the display 30, and is configured to separate the display image into a viewpoint Pa of the first user 1a and a viewpoint Pb of the second user 1b. Here, the surface of the display 30 to which the viewer separation layer 36 is fixed is the display screen 31 or the back surface 32 of the display 30. In the present embodiment, the viewer separation layer 36 corresponds to a user separation layer.

In the present disclosure, a viewpoint P of the user 1 means an observation position where the user 1 observes the display 30. For example, a center point between the right eye 10R and the left eye 10L of the user 1 is the viewpoint P of the user 1. Alternatively, the center point and the like of the face or head of the user 1 can also be considered as the viewpoint P of the user 1.

Hereinafter, the viewpoint P of the user 1 may be referred to as an observation viewpoint P. Moreover, a point indicated by the coordinates of the right eye of the user 1 may be referred to as a right eye viewpoint and a point indicated by the coordinates of the left eye of the user 1 may be referred to as a left eye viewpoint. It should be noted that the right eye viewpoint and the left eye viewpoint are, for example, the position information of the user 1 obtained from the above-mentioned output of the viewpoint detection camera 21.

Separating the display image into an observation viewpoint Pa of the first user 1a and an observation viewpoint Pb of the second user 1b is, for example, separating the image displayed on the display 30 (display screen 31) into the image seen by the first user 1a and the image seen by the second user 1b. For example, as shown in Fig. 5, the viewer separation layer 36 controls the direction (light beam direction) of image light emitted from the display screen 31, guides image light output from some pixels to the observation viewpoint Pa of the first user 1a, and guides image light output from the other pixels to the observation viewpoint Pb of the second user 1b.

It can also be said that separating the image to be displayed on the display 30 into the image seen by the first user 1a and the second user 1b is dividing a viewing field for each user 1. That is, the viewer separation layer 36 is an element that divides the viewing field of the single display 30 into a viewing field 11a of the first user 1a and a viewing field 11b of the second user 1b. In Fig. 5, the viewing field 11a of the first user 1a and the viewing field 11b of the second user 1b are schematically shown by using the black arrows.

Such a function is realized, for example, by configuring the viewer separation layer 36 so that different images are displayed at the observation positions of humans H adjacent to each other. Thus, the configuration and arrangement position of the viewer separation layer 36 are set, for example, on the basis of an interval (personal distance, etc.) between general humans. It should be noted that the viewer separation layer 36 and the above-mentioned both-eye separation layer 35 are both light beam control layers, and their configurations and arrangement positions are different.

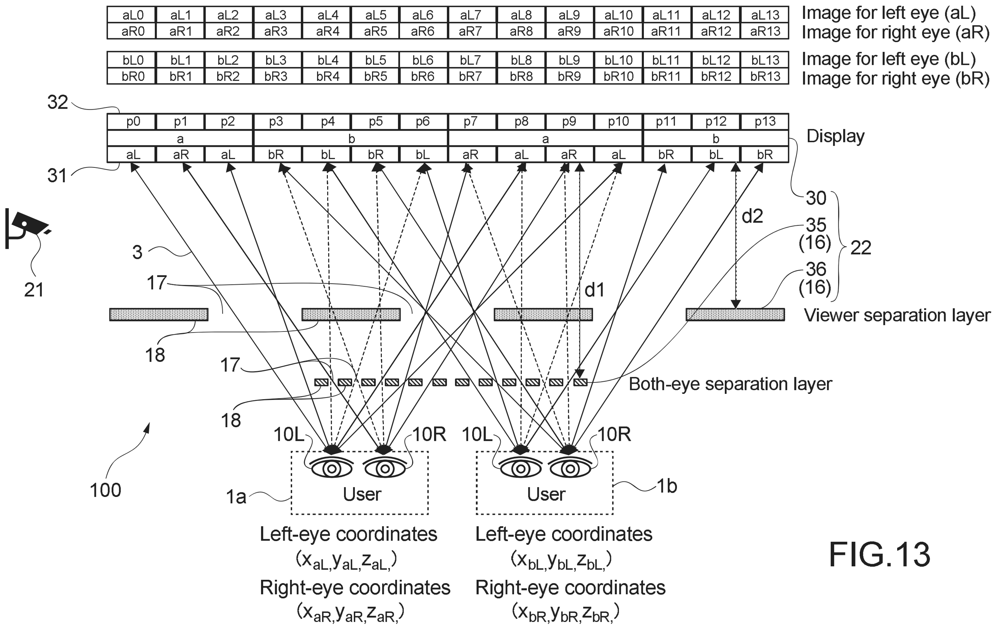

The both-eye separation layer 35 and the viewer separation layer 36 are configured, for example, with a barrier element. The barrier element is an element in which slit parts that transmit light and barrier parts that suppress light are alternately arranged (see Fig. 13, etc.). The slit parts are constituted, for example, by apertures, transparent members, or the like. Moreover, the barrier parts are constituted, for example, by light-shielding members. That is, the barrier element has a structure in which transmissive regions (slit parts) and light-shielding regions (barrier parts) are alternately repeated. This structure is a structure similar to an element called parallax barrier, for example. The barrier element transmits part of image light and shields part of the image light, thereby controlling the image light.

Also, the both-eye separation layer 35 and the viewer separation layer 36 may be configured, for example, with a lenticular lens. The lenticular lens is a lens element in which a plurality of lenses is arranged corresponding to the array of the pixels of the display 30 and controls the image light by refracting image light emitted from each pixel. For example, an element in which thin and long convex lenses are arranged to be adjacent to each other is used as the lenticular lens.

Both of the both-eye separation layer 35 and the viewer separation layer 36 may be constituted by barrier elements or may be constituted by a lenticular lenses. Alternatively, the both-eye separation layer 35 may be constituted by barrier elements and the viewer separation layer 36 may be constituted by a lenticular lens. In contrast, the both-eye separation layer 35 may be constituted by a lenticular lens and the viewer separation layer 36 may be constituted by barrier elements.

As shown in Fig. 3, the display unit 22 includes a transparent base material 33 by using the above-mentioned both-eye separation layer 35 and viewer separation layer 36 as fixation members for fixing the display 30. A first transparent base material 33a for fixing the both-eye separation layer 35 and a second transparent base material 33b for fixing the viewer separation layer 36 are provided as the transparent base material 33.

The transparent base material 33 (the first transparent base material 33a and the second transparent base material 33b) is a plate-like member constituted by a transparent material such as a glass or acryl. For example, a transparent adhesive is used for fixing the transparent base material 33 and each element (the display 30, the both-eye separation layer 35, and the viewer separation layer 36). Alternatively, the respective units including the transparent base material 33 may be fixed to be closely adhered to each other with a frame-shaped fastener or the like (not shown). The use of the transparent base material 33 makes it possible to suppress, for example, variations in the distance between the display 30 and the both-eye separation layer 35 and the distance between the display 30 and the viewer separation layer 36, and keep each distance a suitable value.

Hereinafter, the side to which the display screen 31 of the display 30 is directed will be referred to as a front side and the side to which the back surface 32 of the display 30 is directed will be referred to as a rear side. In the example shown in Fig. 3, the viewer separation layer 36 is fixed to the front side of the display 30 (side of the display screen 31) via a second transparent base material 33b. Moreover, the both-eye separation layer 35 is fixed to the front side of the viewer separation layer 36 via a first transparent base material 33a. That is, the display 30, the viewer separation layer 36, and the both-eye separation layer 35 are arranged in the stated order.

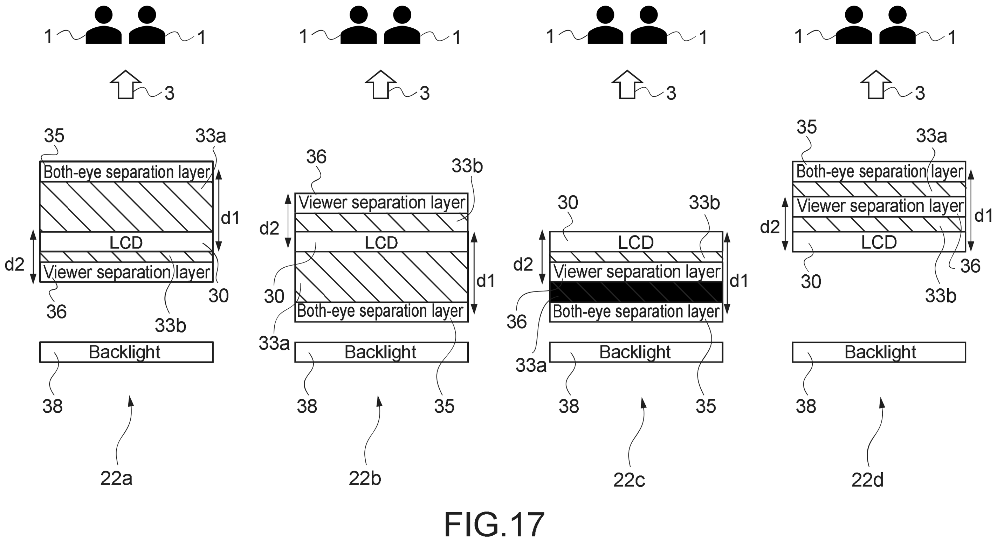

The arrangement of the display unit 22 shown in Fig. 3 is an example and the order of arranging the display 30, the viewer separation layer 36, and the both-eye separation layer 35 is not limited. For example, the order of the viewer separation layer 36 and the both-eye separation layer 35 may be opposite. Moreover, for example, in a case where the display 30 including the backlight is used, it is also possible to arrange the viewer separation layer 36 or the both-eye separation layer 35 on the rear side (back side) of the display 30. An arrangement example of the display unit 22 will be described later with reference to Fig. 17 and the like.

Fig. 6 is a schematic diagram describing light beam control by the first display apparatus 100. The upper graph in Fig. 6 is a schematic graph showing an intensity distribution of the image light 3 separated by the viewer separation layer 36. Moreover, the lower graph in Fig. 6 is a schematic graph showing an intensity distribution of the image light 3 separated by the both-eye separation layer 35. The horizontal axis of each graph is a position of the viewpoint in the horizontal direction of the display 30 and the vertical axis represents the intensity (brightness) of the image light 3. Moreover, in each graph, each peak corresponds to one image.

First of all, a case where the image light 3 emitted from the plurality of pixels on the display 30 passes the viewer separation layer 36 will be considered. As shown on the upper side in Fig. 6, the image light 3 that has passed the viewer separation layer 36 is separated into the image light 3 traveling toward the observation viewpoint Pa of the first user 1a and the image light 3 traveling toward the observation viewpoint Pb of the second user 1b. As a result, a peak 12a with the observation viewpoint Pa as a center and a peak 12b with the observation viewpoint Pb as a center are generated. It should be noted that pixels that emit the image light 3 that constitutes the peak 12a and the peak 12b are basically different pixels.

Next, a case where the image light 3 that has passed the viewer separation layer 36 further passes the both-eye separation layer 35 will be considered. As shown on the lower side in Fig. 6, the image light 3 that has passed the both-eye separation layer 35 is separated into the image light 3 traveling toward a right eye viewpoint PaR of the first user 1a and the image light 3 traveling toward a left eye viewpoint PaL of the first user 1a and the image light 3 traveling toward a right eye viewpoint PbR of the second user 1b and the image light 3 traveling toward a left eye viewpoint PbR of the second user 1b. As a result, a peak 12aR with the right eye viewpoint PaR as a center, a peak 12aL with the left eye viewpoint PaL as a center, a peak 12bR with the right eye viewpoint PbR as a center, and a peak 12bL with a left eye viewpoint PbL as a center are generated.

It is assumed that the peak 12aR and the peak 12aL corresponding to the first user 1a is obtained by separating the peak 12a in the upper graph. Moreover, it is assumed that the peak 12bR and the peak 12bL corresponding to the second user 1b are obtained by separating the peak 12b in the upper graph. It should be noted that pixels that emit the image light 3 that constitutes the peak 12aR, the peak 12aL, the peak 12bR, and the peak 12bL are basically different pixels.

Hereinabove, the case where the image light 3 that has passed the viewer separation layer 36 passes the both-eye separation layer 35 has been described as an example. On the contrary, a configuration in which the image light 3 that has passed the both-eye separation layer 35 passes the viewer separation layer 36 may be used. Also in this case, the image light 3 that has passed the viewer separation layer 36 forms four peaks 12 (the peak 12aR, the peak 12aL, the peak 12bR, and the peak 12bL) similar to the lower side in Fig. 6.

In this manner, the display unit 22 of the first display apparatus 100 is provided with the light beam control layer (the viewer separation layer 36) that divides the viewing field for each user 1 in addition to the light beam control layer (both-eye separation layer 35) that divides the viewing fields of the left and right eyes. Moreover, in the first display apparatus 100, signal processing for display control (panel control) on the display 30 is executed by the processor 24 in accordance with the viewing positions of the plurality of users 1.

Accordingly, it is possible to provide different images to the both eyes of the plurality of users 1. For example, in Fig. 6, the pixels on the display 30 are each assigned to the right eye and the left eye of the first user 1a and the right eye and the left eye of the second user 1b. Accordingly, it is possible to provide different images with respect to four viewpoints.

In the present embodiment, the parallax images are respectively presented to the plurality of users 1 by using this. For example, pixels that are the peak 12aR are used as pixels that display an image for the right eye aR of the first user 1a. Moreover, pixels that are the peak 12aL are used as pixels that display an image for the left eye aL of the first user 1a. Similarly, pixels that are the peak 12bR are used as pixels that display an image for the right eye bR of the second user 1b. Moreover, pixels that are the peak 12bL are used as pixels that display an image for the left eye bL of the second user 1b. Accordingly, it is possible for the plurality of users 1 to simultaneously experience binocular stereoscopic vision by the same apparatus (first display apparatus 100).

In addition, in this configuration combining the both-eye separation layer 35 with the viewer separation layer 36, each pixel provided on the display 30 is always assigned to one image for the right eye or the left eye of the plurality of users 1. This enables image display efficiently using the number of pixels without waste. Accordingly, for example, it is possible to increase the resolution of the image (image for the right eye or image for the left eye) displayed for each viewpoint. As a result, it is possible to simultaneously provide binocular stereoscopic vision with high-resolution to the plurality of users 1.

[Operation of Display Apparatus For One Person]

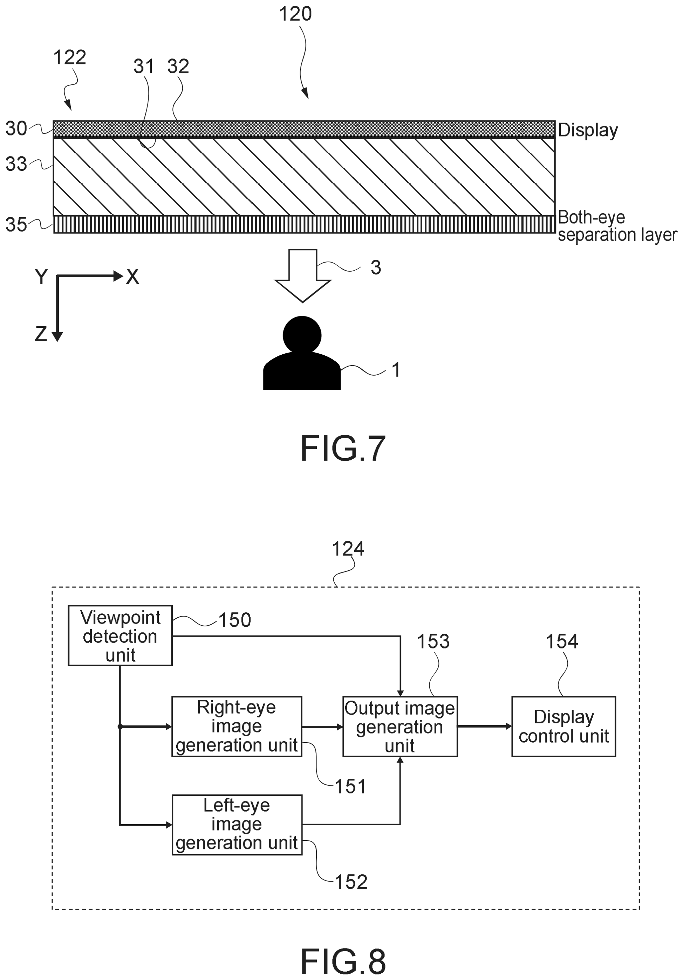

Hereinafter, an operation of the display apparatus for one person will be described as a comparative example before describing the operation of the first display apparatus that supports the plurality of users 1. Fig. 7 is a schematic diagram showing a configuration example of a display unit of a display apparatus for one person. Fig. 8 is a block diagram showing a configuration example of a processor of the display apparatus for one person. A display apparatus 120 for one person is a stereoscopic display apparatus targeting the one user 1 and is configured as a line-of-sight detection-type LFD that displays a three-dimensional image in accordance with the position of the user 1 as a target.

As shown in Fig. 7, a display unit 122 of the display apparatus 120 for one person includes a display 30, a both-eye separation layer 35, and a transparent base material 33. The both-eye separation layer 35 is fixed to the display 30 via the transparent base material 33. As compared to the display unit 22 of the first display apparatus 100, the display unit 122 has a configuration in which only the both-eye separation layer 35 is provided without the viewer separation layer 36.

A processor 124 of the display apparatus 120 for one person shown in Fig. 8 is an information processing apparatus that controls the operation of the entire display apparatus 120 for one person. The processor 124 includes a viewpoint detection unit 150, a right-eye image generation unit 151, a left-eye image generation unit 152, an output image generation unit 153, and a display control unit 154 as functional blocks.

The viewpoint detection unit 150 detects coordinates of the both eyes of the user 1 (relative coordinates with respect to the display 30). Moreover, the viewpoint detection unit 150 continuously detects the coordinates of the both eyes of the user 1 at constant intervals. For example, right-eye coordinates $(XR, YR, ZR)$ and left-eye coordinates $(XL, YL, ZL)$ of the user 1 are calculated at constant intervals on the basis of the output of the viewpoint detection camera (not shown) that images the face of the user 1.

On the basis of the right-eye coordinates detected by the viewpoint detection unit 150, the right-eye image generation unit 151 generates an image (image for the right eye R) that should be observed from the position of the right eye 10R of the user 1. Moreover, on the basis of the left-eye coordinates detected by the viewpoint detection unit 150, the left-eye image generation unit 151 generates an image (image for the left eye L) that should be observed from the position of the left eye 10L of the user 1. The image for the right eye R and the image for the left eye L are input images input to the output image generation unit 153.

On the basis of the right-eye coordinates and the left-eye coordinates of the user 1, the output image generation unit 153 assigns a pixel value of either one of the image for the right eye R and the image for the left eye L to the plurality of pixels on the display 30. For example, for each pixel, the image for the right eye R is assigned in a case where a larger amount of light beam enters the right eye 10R of the user 1 or the image for the left eye L is assigned in a case where a larger amount of light beam enters the left eye 10L of the user 1. As a result, a composite image combining the image for the right eye R and the image for the left eye L are generated. This composite image is an output image that is actually displayed on the display 30.

The display control unit 154 outputs the data of the output image (composite image of the image for the right eye R and the image for the left eye L) generated by the output image generation unit 153 to the display 30 and causes the display 30 to display the output image.

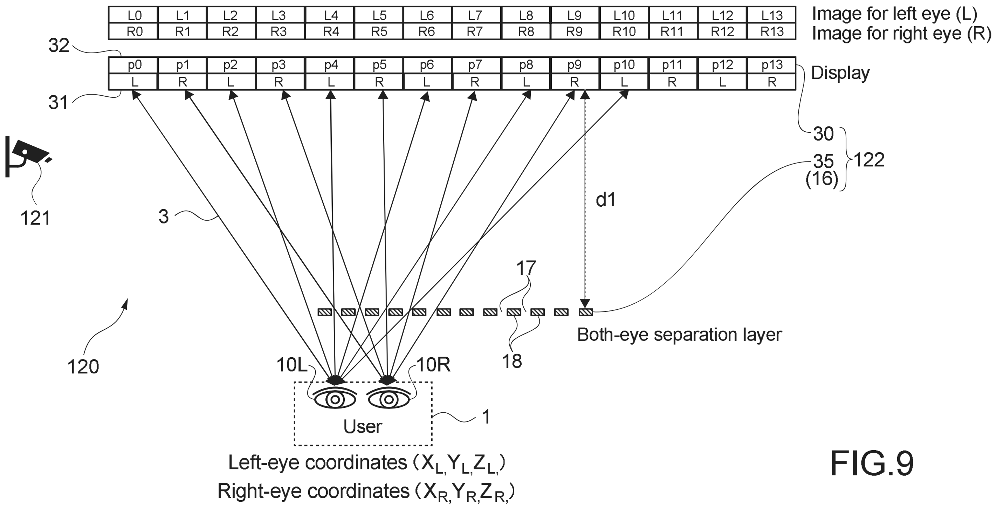

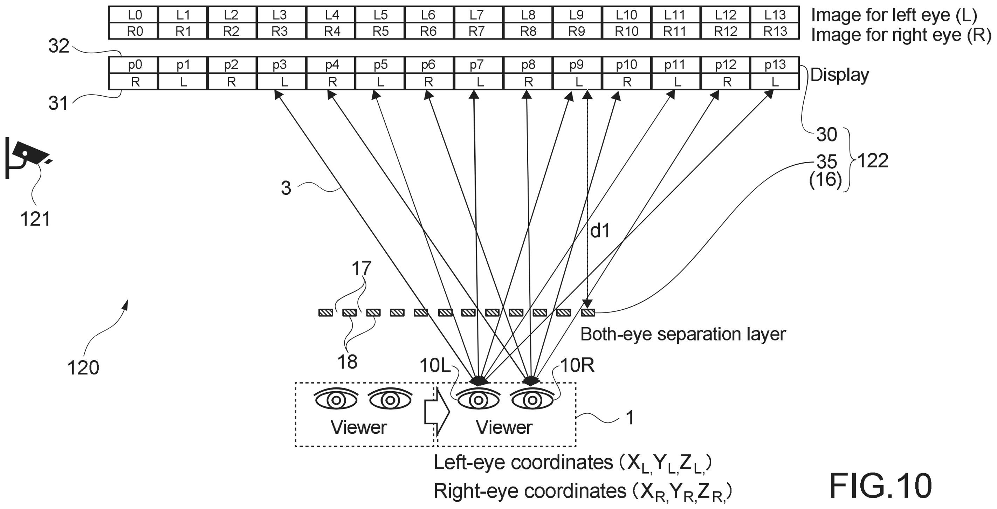

Figs. 9 and 10 are schematic diagrams showing an example of the stereoscopic display by the display apparatus 120 for one person. Figs. 9 and 10 schematically show cross-sectional views of the display 30 and the both-eye separation layer 35 that constitutes the display unit 122, which are taken along the XZ plane. Moreover, a viewpoint detection camera 121 provided in the display apparatus 120 for one person is arranged to image the user 1. Fig. 10 shows a state in which the user 1 has moved from the state shown in Fig. 9.

Hereinafter, pixels of the display 30 arranged in the X-axis direction (horizontal direction) of the pixels of the display 30 will be referred to as (p0, p1, ... p13). Moreover, as shown on the upper side in the figure of the display 30, pixels of the image for the right eye R will be referred to as (R0, R1, ... R13) and pixels of the image for the left eye L will be referred to as (L0, L1, ... L13), which correspond to the pixels (p0, p1, ... p13) of the display 30.

The both-eye separation layer 35 shown in Fig. 9 is barrier elements 16. The barrier elements 16 are elements in which slit parts 17 and barrier parts 18 are alternately arranged. In this case, the image light 3 emitted from the pixels of the display 30 transmits only the slit parts 17 of the barrier elements 16. The intervals of the slit parts 17 (barrier parts 18) are parameters according to a configuration of the both-eye separation layer 35. It should be noted that the lenticular lens may be used as the both-eye separation layer 35.

Moreover, the distance between the display 30 and the both-eye separation layer 35 in the Z-axis direction (depth direction) is denoted by d1. The distance d1 is, for example, a distance from the display screen 31 of the display 30 to a surface of the both-eye separation layer 35, which is directed to the display screen 31. The distance d1 is a parameter associated with the arrangement of the both-eye separation layer 35.

A viewing distance D is typically set to the display apparatus that realizes binocular stereoscopic vision. The viewing distance D is, for example, a distance in the depth direction (Z-axis direction) that enables suitable perception of the three-dimensional image 2 by means of binocular stereoscopic vision. The viewing distance D is, for example, set as a distance to the display screen 31 of the display 30.

The slit intervals of the both-eye separation layer 35 and the distance d1 to the display 30 are, for example, set so that the image for the right eye and the image for the left eye can be suitably visually recognized at a position separated by the viewing distance D set to the display apparatus 120 for one person.

The user 1 looks at the display 30 through the slit parts 17 (both-eye separation layer 35) designed to be suitable to the viewing distance D. In this case, pixels of the pixels (p0, p1, ... p13) on the display 30, which are visible to the right eye 10R and the left eye 10L, as shown in Fig. 9 are as follows.

Pixels (p1, p3, p5, p7, p9, p11, p13) visible to the right eye 10R
Pixels (p0, p2, p4, p6, p8, p10, p12) visible to the left eye 10L

For example, the pixels (R1, R3, R5, R7, R9, R11, R13) of the image for the right eye R are respectively assigned to the pixels (p1, p3, p5, p7, p9, p11, p13) visible to the right eye 10R. Accordingly, it is possible for the user 1 to view the image for the right eye R by the right eye 10R. Similarly, the pixels (L0, L2, L4, L6, L8, L10, L12) of the image for the left eye L are respectively assigned to the pixels (p0, p2, p4, p6, p8, p10, p12) visible to the left eye 10L. Accordingly, it is possible for the user 1 to view the image for the left eye L by the left eye 10L. As a result, it is possible for the user 1 to perceive a three-dimensional image represented by the image for the right eye R and the image for the left eye L.

It should be noted that the corresponding relationship between the pixels (p0, p1, ... p13) of the display 30 and the right eye 10R and the left eye 10L changes depending on the position of the user 1. For example, as shown in Fig. 10, it is assumed that the user 1 has moved in the horizontal direction. In this case, the pixels visible to the right eye 10R and the left eye 10L are as follows.

Pixels (p0, p2, p4, p6, p8, p10, p12) visible to the right eye 10R
Pixels (p1, p3, p5, p7, p9, p11, p13) visible to the left eye 10L

In this manner, even in a case where the corresponding relationship has changed, the right-eye coordinates (XR, YR, ZR) and the left-eye coordinates (XL, YL, ZL) of the user 1 has been detected by the viewpoint detection camera 121, and therefore it is possible to suitably assign the pixels on the display 30. Thus, it is possible for the user 1 to correctly perceive a three-dimensional image representing the image for the right eye R and the image for the left eye L also in the position after movement.

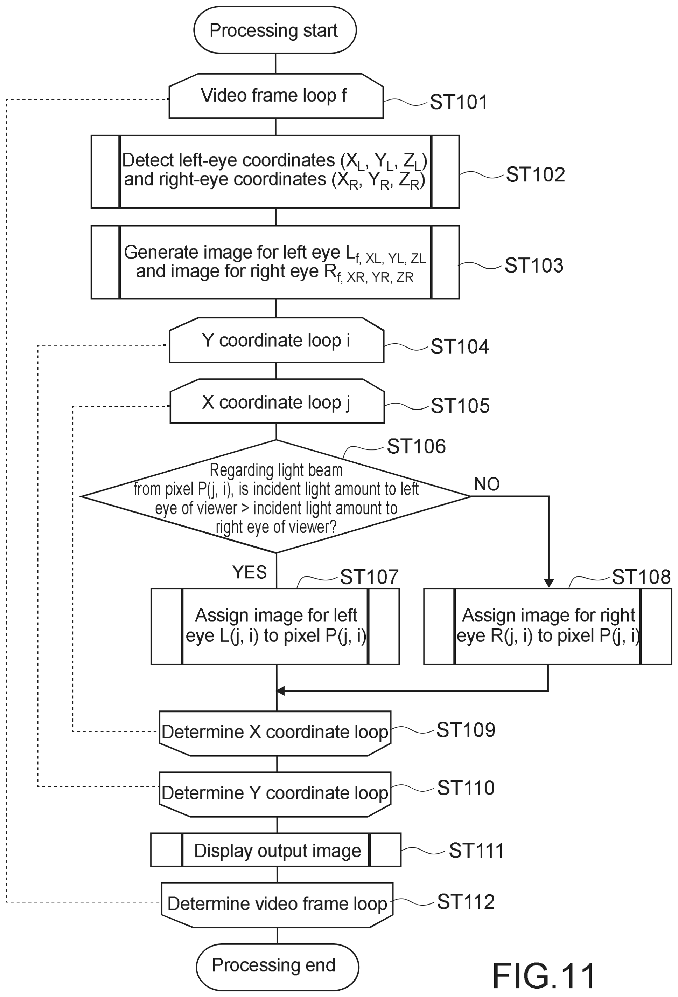

Fig. 11 is a flowchart showing an operation example of the display apparatus 120 for one person. Here, a series of images that constitute the video that displays the 3D content will be respectively referred to as a video frame. First of all, a loop relating to the video frame is started (Step 101). It is assumed that an argument for this loop is f. A video frame f represents the fth frame.

The viewpoint detection unit 150 detects, from an image captured by the viewpoint detection camera 121, the right-eye coordinates (XR, YR, ZR) and the left-eye coordinates (XL, YL, ZL) of the user 1 (Step 102). Next, the image for the right eye R and the image for the left eye L are generated from a detection result of the viewpoint detection unit 150 (Step 103). Specifically, the right-eye image generation unit 151 generates the image for the right eye R toward the right-eye coordinates (XR, YR, ZR) for the fth frame. Moreover, the left-eye image generation unit 151 generates the image for the left eye L toward the left-eye coordinates (XL, YL, ZL) for the fth frame.

For the pixel P(j, i) of the display 30, the Yth coordinate loop is started setting the argument to i (Step 104) and the Xth coordinate loop is started setting the argument to j (Step 105). Next, the incident light amount of the light beam (image light 3) from the pixel P(j, i) to the right eye 10R and the left eye 10L is determined by the output image generation unit 153 (Step 106). Here, whether or not the incident light amount to the left eye 10L is larger than the incident light amount to the right eye 10R is determined.

It should be noted that a method of determining an incident light amount is not limited. For example, on the basis of a model including the pixel P(j, i), the right eye 10R or the left eye 10L, and the slit parts 17, a simulation is performed in advance to determine whether a larger amount of light beam from the pixel P(j, i) enters the right eye 10R or the left eye 10L. The determination may be performed by using a lookup table and the like recording this simulation result. Moreover, the incident light amount may be determined by performing a simulation for each loop of the video frame f.

In a case where the incident light amount to the left eye 10L is larger than the incident light amount to the right eye 10R (YES in Step 106), a pixel L(j, i) of the image for the left eye L is assigned to the pixel P(j, i) (Step 107). Moreover, in a case where the incident light amount to the left eye 10L is equal to or smaller than the incident light amount to the right eye 10R (NO in Step 106), a pixel R(j, i) of the image for the right eye R is assigned to the pixel P(j, i) (Step 108).

When the assignment of the image to the pixel P(j, i) is completed, the Xth coordinate loop is determined (Step 109). For example, in a case where an argument j has not reached the predetermined value, the processing of Step 105 and subsequent steps are repeated by increasing the value of j by one. In a case where the argument j has reached the predetermined value, the Yth coordinate loop is determined (Step 110). For example, in a case where an argument i has not reached the predetermined value, the processing of Step 104 and subsequent steps is repeated by increasing the value of i by one.

In a case where the argument i has reached the predetermined value, the assignment for all pixels P is completed. The output image is generated by assigning a pixel of either the image for the right eye R or the image for the left eye L to all pixels P in this manner. In this case, the display control unit 154 outputs the output image to the display 30 for displaying the output image (Step 111). Accordingly, the image for the right eye R is displayed to the right eye 10R of the user 1 and the image for the left eye L is displayed to the left eye 10L. As a result, it is possible for the user 1 to perceive a three-dimensional image in the fth frame.

When the output image is displayed, a video frame loop is determined (Step 112). For example, in a case where the video frame remains, the processing of Step 101 and subsequent steps is repeated by increasing the value of f by one. Moreover, the processing ends if no video frame remains.

With such processing, in the display apparatus 120 for one person that is the line-of-sight detection-type LFD, the pixel P(j, i) of the display 30 is assigned to either the image for the right eye R or the image for the left eye L. Therefore, for example, as compared to the multi-view type that displays three or more types of images, the resolution per viewpoint is higher, and it is possible to efficiently use the number of pixels without waste.

It should be noted that in the both-eye separation layer 35 designed for one person, the viewing field 11R of the right eye 10R and the viewing field 11L of the left eye 10L are alternately repeated at intervals substantially the same as the pupillary distance as described above with reference to Fig. 4. Due to the presence of such a region where the viewing fields are repeated, the other user 1 can see an unintended video. Thus, in a case where the plurality of users 1 looks at the display apparatus 120 for one person, each user 1 perceives the common three-dimensional image 2 or sees parallax images inverted in the left and right direction.

[Functional Configuration of First Display Apparatus]

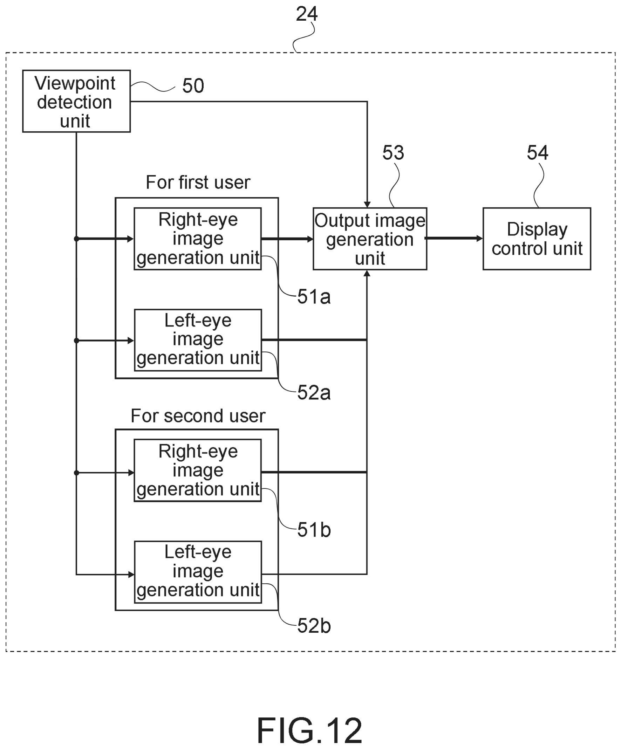

Hereinafter, an operation of the first display apparatus 100 according to the present embodiment will be described with reference to the operation of the display apparatus 120 for one person according to the above-mentioned comparative example. Fig. 12 is a block diagram showing a configuration example of a processor of the first display apparatus. The processor 24 includes a viewpoint detection unit 50, a right-eye image generation unit 51a, a left-eye image generation unit 52a, a right-eye image generation unit 51b, a left-eye image generation unit 52b, an output image generation unit 53, and a display control unit 54 as functional blocks.

The viewpoint detection unit 50 detects both-eye coordinates of the first user 1a and the second user 1b (relative coordinates with respect to the display 30). Moreover, the viewpoint detection unit 50 continuously detects the both-eye coordinates of the first user 1a and the second user 1b at constant intervals. For example, on the basis of the output (captured image) of the viewpoint detection camera, right-eye coordinates (XaR, YaR, ZaR) and left-eye coordinates (XaL, YaL, ZaL) of the first user 1a are calculated at constant intervals. Moreover, on the basis of the same captured image, right-eye coordinates (XbR, YbR, ZbR) and left-eye coordinates (XbL, YbL, ZbL) of the second user 1b are calculated at constant intervals. In the present embodiment, the right-eye coordinates and the left-eye coordinates of the first user 1a (second user 1b) are user position information.

The right-eye image generation unit 51a and the left-eye image generation unit 52a are blocks that perform image generation processing for the first user 1a. On the basis of the right-eye coordinates (XaR, YaR, ZaR) of the first user 1a detected by the viewpoint detection unit 50, the right-eye image generation unit 51a generates the image (image for the right eye aR) that should be observed from the position of the right eye 10R of the first user 1a. Moreover, on the basis of the left-eye coordinates (XaL, YaL, ZaL) of the first user 1a detected by the viewpoint detection unit 50, the left-eye image generation unit 52a generates the image (image for the left eye aL) that should be observed from the position of the left eye 10L of the first user 1a.

The right-eye image generation unit 51b and the left-eye image generation unit 52b are blocks that perform image generation processing for the second user 1b. On the basis of the right-eye coordinates (XbR, YbR, ZbR) of the second user 1b detected by the viewpoint detection unit 50, the right-eye image generation unit 51b generates the image (image for the right eye bR) that should be observed from the position of the right eye 10R of the second user 1b. Moreover, on the basis of the left-eye coordinates (XbL, YbL, ZbL) of the second user 1b detected by the viewpoint detection unit 50, the left-eye image generation unit 52b generates the image (image for the left eye bL) that should be observed from the position of the left eye 10L of the second user 1b.

In the present embodiment, the image for the right eye aR, the image for the left eye aL, the image for the right eye bR, and the image for the left eye bL are display images to be displayed on the display 30. Moreover, these images are input images input to the output image generation unit 53.

On the basis of the right-eye coordinates and the left-eye coordinates of the first user 1a and the second user 1b, the output image generation unit 53 assigns the pixel value of any one of the image for the right eye aR, the image for the left eye aL, the image for the right eye bR, and the image for the left eye bL to the plurality of pixels on the display 30. As a result, a composite image combining the four types of images included in the display image are generated. This composite image is an output image to be actually displayed on the display 30.

The display control unit 54 outputs data about the output image (composite image of the image for the right eye aR, the image for the left eye aL, the image for the right eye bR, and the image for the left eye bL) generated by the output image generation unit 53 to the display 30 and causes the display 30 to display the output image. In this manner, in the processor 24, the composite image (output image) combining the image included in the display image is generated on the basis of the user position information, and the display 30 is controlled to display the composite image.

[Operation of First Display Apparatus]

Fig. 13 is a schematic diagram showing an example of a stereoscopic display of the first display apparatus 100. Fig. 13 schematically shows the pixels (p0, p1, ... p13) of the display 30 arranged in the X-axis direction (horizontal direction) similar to Fig. 9 described above. Here, the viewer separation layer 36 and the both-eye separation layer 35 are arranged in the stated order on the lower side in the figure which is the display screen 31 of the display 30.

Also, on the upper side in the figure of the display 30, the image for the left eye aL and the image for the right eye aR of the first user 1a and the image for the left eye bL and the image for the right eye bR of the second user 1b are schematically shown in order from above. Hereinafter, pixels of the image for the right eye aR corresponding to the pixels (p0, p1, ... p13) of the display 30 will be referred to as (aR0, aR1, ... aR13), pixels of the image for the left eye aL will be referred to as (aL0, aL1, ... aL13), pixels of the image for the right eye bR will be referred to as (bR0, bR1, ... bR13), and pixels of the image for the left eye bL will be referred to as (bL0, bL1, ... bL13).

In Fig. 13, the barrier elements 16 are used as the viewer separation layer 36. In the viewer separation layer 36, the intervals of the slit parts 17 (barrier parts 18) are parameters according to a configuration of the viewer separation layer 36. It should be noted that a lenticular lens may be used as the viewer separation layer 36.

Moreover, a distance in the Z-axis direction (depth direction) between the display 30 and the viewer separation layer 36 is denoted by d2. The distance d2 is, for example, a distance from the display screen 31 of the display 30 to a surface of the viewer separation layer 36, which is directed to the display screen 31. The distance d2 is a parameter according to the arrangement of the viewer separation layer 36.

The slit intervals of the viewer separation layer 36 and the distance d2 from the display 30 are set so that the pixels visible to the user 1 are different at a position separated by the viewing distance D set to the first display apparatus 100, for example. For example, each parameter of the viewer separation layer 36 is set so that the pixels visible to each user 1 via the viewer separation layer 36 are different in a state in which the first user 1a and the second user 1b are spaced apart from each other by a predetermined distance.

By providing the viewer separation layer 36, visible pixels and invisible pixels (shielded pixels) are each generated for the first user 1a and the second user 1b. In Fig. 13, paths of light beams visually recognized to transmit the slit parts 17 of the viewer separation layer 36 are shown by the solid-line arrows. Moreover, paths of light beams shielded by the barrier parts 18 of the viewer separation layer 36 so that they are invisible are shown by the dotted-line arrow. The section with the symbol "a" is associated with the pixels visible to the first user 1a and the section with the symbol "b" is associated with the pixels visible to the second user 1b.

For example, the pixels visible to the first user 1a (or the second user 1b) of the pixels (p0, p1, ... p13) on the display 30 are as follows.

Pixels (p0, p1, p2, p7, p8, p9, p10) visible to the first user 1a
Pixels (p3, p4, p5, p6, p11, p12, p13) visible to the second user 1b

In this manner, the viewer separation layer 36 separates the pixels for each user 1. That is, the viewer separation layer 36 separates the viewing field for each user 1.

Also, in Fig. 13, the both-eye separation layer 35 is constituted by the barrier elements 16. The present technology is not limited thereto, and the both-eye separation layer 35 may be constituted by a lenticular lens. The both-eye separation layer 35 of the first display apparatus 100 is, for example, configured to be similar to the both-eye separation layer 35 used in the display apparatus 120 for one person shown in Fig. 9. Alternatively, the configuration of the both-eye separation layer 35 (the intervals of the slit parts 17, etc.) may be adjusted in accordance with the characteristics and the like of the viewer separation layer 36.

It is assumed that the first user 1a and the second user 1b look at the display 30 through the viewer separation layer 36 and the both-eye separation layer 35 designed to be suitable to the viewing distance D. In this case, as shown in Fig. 13, the pixels visible to the right eye 10R and the left eye 10L of the first user 1a (or the second user 1b) of the pixels (p0, p1, ... p13) on the display 30 are as follows.

Pixels (p1, p7, p9) visible to the right eye 10R of the first user 1a
Pixels (p0, p2, p8, p10) visible to the left eye 10L of the first user 1a
Pixels (p3, p5, p11, p13) visible to the right eye 10R of the second user 1b
Pixels (p4, p6, p12) visible to the left eye 10L of the second user 1b

For example, the pixels (aR1, aR7, aR9) of the image for the right eye aR are respectively assigned to the pixels (p1, p7, p9) visible to the right eye 10R of the first user 1a. Accordingly, it is possible for the first user 1a to view the image for the right eye aR by the right eye 10R. Similarly, the pixels (aL0, aL2, aL8, aL10) of the image for the left eye aL are respectively assigned to the pixels (p0, p2, p8, p10) visible to the left eye 10L of the first user 1a. Accordingly, it is possible for the first user 1a to view the image for the left eye aL by the left eye 10L.

Moreover, pixels (bR3, bR5, bR11, bR13) of the image for the right eye bR are respectively assigned to the pixels (p3, p5, p11, p13) visible to the right eye 10R of the second user 1b. Accordingly, it is possible for the second user 1b to view the image for the right eye bR by the right eye 10R. Similarly, pixels (bL4, bL6, bL12) of the image for the left eye bL are respectively assigned to the pixels (p4, p6, p12) visible to the left eye 10L of the second user 1b. Accordingly, it is possible for the second user 1b to view the image for the left eye bL by the left eye 10L.

As a result, it is possible for the first user 1a to perceive a three-dimensional image represented by the image for the right eye aR and the image for the left eye aL and at the same time it is possible for the second user 1b to perceive a three-dimensional image represented by the image for the right eye bR and the image for the left eye bL.

It should be noted that the corresponding relationship between the pixels (p0, p1, ... p13) of the display 30 and the positions of the both eyes of the first user 1a and the second user 1b changes depending on the position of each user 1 as in a case of the display apparatus 120 for one person. In a case where the corresponding relationship has changed in this manner, the viewpoint detection camera 21 detects the right eye coordinates and the left-eye coordinates of each user 1 and the pixels on the display 30 are assigned to any one of the image for the right eye aR, the image for the left eye aL, the image for the right eye bR, and the image for the left eye bL. Accordingly, it is possible for each user 1 to correctly perceive a three-dimensional image even at the position after moving.

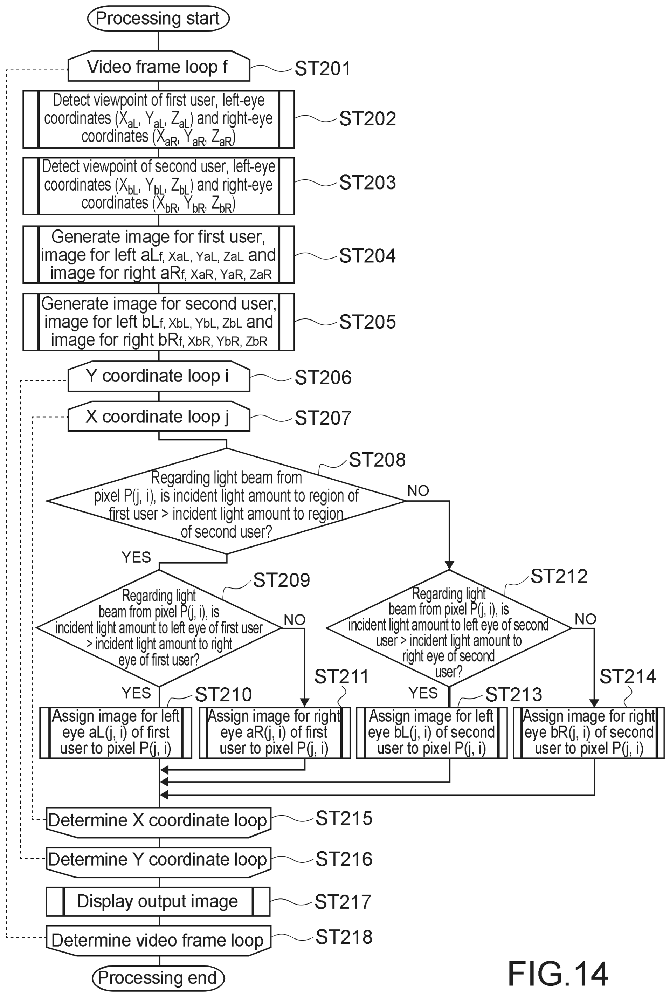

Fig. 14 is a flowchart showing an operation example of the processor 24. The processing shown in Fig. 14 is repeatedly executed for each video frame as in the processing as described above with reference to Fig. 11. First of all, the loop related to the video frame is started (Step 201).

The viewpoint detection unit 50 executes viewpoint detection processing related to the first user 1a (Step 202) and viewpoint detection processing related to the second user 1b (Step 203) from the captured image captured by the viewpoint detection camera 21. It should be noted that the processing in Steps 202 and 203 may be executed in an opposite order or may be executed in parallel.

In Step 202, the right-eye coordinates $(XaR, YaR, ZaR)$ and the left-eye coordinates $(XaL, YaL, ZaL)$ of the first user 1a are detected from the captured image. Moreover, in Step 203, the right-eye coordinates $(XbR, YbR, ZbR)$ and the left-eye coordinates $(XbL, YbL, ZbL)$ of the second user 1b are detected from the captured image.

Next, generation processing for an image to be displayed to the first user 1a (Step 204) and generation processing for an image to be displayed to the second user 1b (Step 205) are executed on the basis of the detection result of the viewpoint detection unit 50. It should be noted that the processing of Step 204 and 205 may be executed in an opposite order or may be executed in parallel.

In Step 204, the right-eye image generation unit 51a generates the image for the right eye aR directed to the right-eye coordinates $(XaR, YaR, ZaR)$ of the first user 1a for the fth frame. Moreover, the left-eye image generation unit 52a generates the image for the left eye aL directed to the left-eye coordinates $(XaL, YaL, ZaL)$ of the first user 1a for the fth frame.

Also, in Step 205, the right-eye image generation unit 51b generates the image for the right eye bR directed to the right-eye coordinates (XbR, YbR, ZbR) of the second user 1b for the fth frame. Moreover, the left-eye image generation unit 52b generates the image for the left eye bL directed to the left-eye coordinates (XbL, YbL, ZbL) of the second user 1b for the fth frame.

When the four input images (the image for the right eye aR, the image for the left eye aL, the image for the right eye bR, and the image for the left eye bL) are generated, the processing of assigning each input image is executed on the pixels of the display 30. First of all, for the pixel P(j, i) of the display 30, the Yth coordinate loop is started setting the argument to i (Step 206) and the Xth coordinate loop is started setting the argument to j (Step 207).

Next, the output image generation unit 53 determines an incident light amount of the light beam (image light 3) to the region of the first user 1a and the region of the second user 1b from the pixel P(j, i) (Step 208). This processing is processing of associating the pixel P(j, i) with either the first user 1a or the second user 1b.

Here, whether or not the incident light amount to the region of the first user 1a is larger than the incident light amount to the region of the second user 1b is determined. For example, the sum of the incident light amount of the light beam from the pixel P(j, i) to the right eye 10R and the left eye 10L of the first user 1a is calculated as the incident light amount to the region of the first user 1a. Moreover, the sum of the incident light amount of the light beam from the pixel P(j, i) to the right eye 10R and the left eye 10L of the second user 1b is calculated as the incident light amount to the region of the second user 1b. These sums of the incident light amount are compared.

Also, for example, the region of the first user 1a and the region of the second user 1b may be virtually set and the incident light amount of the light beam to those regions from the pixel P(j, i) may be compared. In this case, a region occupied by the face in the captured image, a region with a predetermined size including the both eyes, and the like are used as the region of the first user 1a (second user 1b).

A method using the sum of the incident light amount to the both eyes or a method using the incident light amount to a virtually set region may use a result simulated in advance for example or may be simulated for each video frame. In addition, a method of associating the first user 1a or the second user 1b with the pixel P(j, i) is not limited.

In a case where the incident light amount to the region of the first user 1a is larger than the incident light amount to the region of the second user 1b (YES in Step 208), the pixel P(j, i) is associated with the first user 1a and the incident light amount of the light beam to the right eye 10R and the left eye 10L of the first user 1a is determined (Step 209). Here, whether or not the incident light amount to the left eye 10L is larger than the incident light amount to the right eye 10R is determined with respect to the first user 1a.

In a case where the incident light amount to the left eye 10L of the first user 1a is larger than the incident light amount to the right eye 10R (YES in Step 209), the pixel aL(j, i) of the image for the left eye aL is assigned to the pixel P(j, i) (Step 210). Moreover, in a case where the incident light amount to the left eye 10L of the first user 1a is equal to or smaller than the incident light amount to the right eye 10R (NO in Step 209), the pixel aR(j, i) of the image for the right eye aR is assigned to the pixel P(j, i) (Step 211).

On the other hand, in a case where the incident light amount to the region of the first user 1a is equal to or smaller than the incident light amount to the region of the second user 1b (NO in Step 208), the pixel P(j, i) is associated with the second user 1b and the incident light amount of the light beam to the right eye 10R and the left eye 10L of the second user 1b is determined (Step 212). Here, whether or not the incident light amount to the left eye 10L is larger than the incident light amount to the right eye 10R is determined with respect to the second user 1b.

In a case where the incident light amount to the left eye 10L of the second user 1b is larger than the incident light amount to the right eye 10R (YES in Step 212), the pixel bL(j, i) of the image for the left eye bL is assigned to the pixel P(j, i) (Step 213). Moreover, in a case where the incident light amount to the left eye 10L of the second user 1b is equal to or smaller than the incident light amount to the right eye 10R (NO in Step 212), the pixel bR(j, i) of the image for the right eye bR is assigned to the pixel P(j, i) (Step 214).

The determination processing in Steps 209 and 212 is, for example, performed similar to the determination processing in Step 106 shown in Fig. 11. Moreover, for example, in Step 208, in a case where the incident light amount to the right eye 10R and the left eye 10L of each user is calculated, the calculation result may be used. In addition, a method of determining an incident light amount to the right eye 10R and the left eye 10L is not limited.

In this manner, the output image generation unit 53 assigns the image for the left eye aL to the pixel P(j, i) in a case where the largest amount of the light beam enters the left eye 10L of the first user 1a, assigns the image for the right eye aR in a case where the largest amount of the light beam enters the right eye 10R of the first user 1ab, assigns the image for the left eye bL in a case where the largest amount of the light beam enters the left eye 10L of the second user 1b, and assigns the image for the right eye bR in a case where the largest amount of the light beam enters the right eye 10R of the second user 1b.

When the assignment of the image to the pixel P(j, i) is completed, the Xth coordinate loop is determined (Step 215). For example, in a case where the argument j has not reached the predetermined value, the processing of Step 207 and subsequent steps is repeated by increasing the value of j by one. In a case where the argument j has reached the predetermined value, the Yth coordinate loop is determined (Step 216). For example, in a case where the argument i has not reached the predetermined value, the processing of Step 206 and subsequent steps is repeated by increasing the value of i by one.

In a case where the argument i has reached the predetermined value, the assignment for all pixels P is completed. Accordingly, the composite image (output image) in which the pixel of any one of the four input images (the image for the right eye aR, the image for the left eye aL, the image for the right eye bR, and the image for the left eye bL) is assigned to all pixels P is generated. In this case, the display control unit 54 outputs the output image to the display 30 for displaying the output image (Step 217).

Accordingly, the image for the right eye aR is displayed to the right eye 10R of the first user 1a and the image for the left eye aL is displayed to the left eye 10L of the first user 1a. Moreover, the image for the right eye bR is displayed to the right eye 10R of the second user 1b and the image for the left eye bL is displayed to the left eye 10L of the second user 1b. As a result, it is possible for the first user 1a and the second user 1b to simultaneously perceive a three-dimensional image in the fth frame as viewed from each position.

When the output image is displayed, the video frame loop is determined (Step 218). For example, in a case where the video frame remains, the processing of Step 201 and subsequent steps is repeated by increasing the value of f by one. Moreover, the processing ends if no video frame remains.

In this manner, in the present embodiment, the image for the right eye aR of the first user 1a and the image for the left eye aL of the first user 1a and the image for the right eye bR of the second user 1b and the image for the left eye bL of the second user 1b are generated, and a display mode (first display mode) that causes the display 30 to display these images is executed. Accordingly, it is possible for the two users 1 to perceive a three-dimensional image as viewed from each position.

Moreover, in the first display apparatus 100, the pixel P(j, i) of the display 30 is always assigned to any one of the image for the right eye aR, the image for the left eye aL, the image for the right eye bR, and the image for the left eye bL. That is, all pixels are used for displaying the parallax images of the first user 1a and the second user 1b and no pixels are wasted. Accordingly, it is possible to simultaneously provide binocular stereoscopic vision with high-resolution to the two users 1.

It should be noted that the case where the number of users 1 is two has been mainly described as the first display mode hereinabove. The present technology is not limited thereto, and it is also possible to adapt the first display mode for three or more users 1. For example, in a case where the number of users 1 is three, in Fig. 14, processing of detecting a viewpoint of a third user 1 and processing of generating an image for a right eye and an image for a left eye for the third user 1 are added. Moreover, it is possible to suitably display the image for the right eye and the image for the left eye for the third user 1 by determining the incident light amount of the light beam and the like to the right eye 10R and the left eye 10L of the third user 1 as in the two other users 1 when assigning the pixel P(j, i). Moreover, as for the three or more users 1, it is possible to simultaneously provide binocular stereoscopic vision according to the position of each user 1 by adding similar processing.

[Parameters of Both-Eye Separation Layer and Viewer Separation Layer]

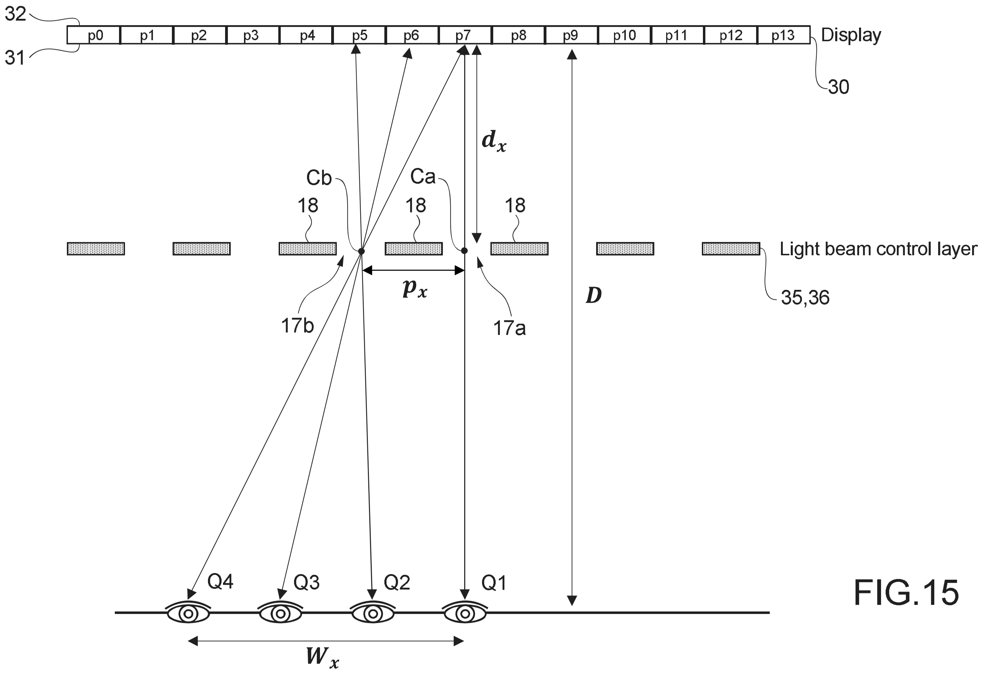

Fig. 15 is a schematic diagram showing parameters of the both-eye separation layer and the viewer separation layer. Fig. 15 schematically shows the display 30 and the barrier elements 16 arranged facing the display screen 31 of the display 30. The barrier elements 16 are an example of the light beam control layer and are a model representing the both-eye separation layer 35 or the viewer separation layer 36. First of all, a viewing field repetition interval Wn by the barrier elements 16 will be described. Hereinafter, each parameter is denoted by index n. The parameter relating to the both-eye separation layer 35 is set to n = 1 and the parameter relating to the viewer separation layer 36 is set to n = 2.

The barrier elements 16 are elements in which the slit parts 17 and the barrier parts 18 are alternately arranged along the horizontal direction (X-axis direction). Here, the barrier pitch of the barrier elements 16 will be referred to as pn. The barrier pitch pn is an arrangement cycle of the barrier parts 18 (slit parts 17). For example, the interval of the center position of the slit parts 17 adjacent to each other is the barrier pitch pn. Moreover, the distance between the display 30 and the barrier element 16 in the depth direction (Z direction) is dn. The distance dn corresponds to the distance d1 between the display 30 and the both-eye separation layer 35 or the distance d2 between the display 30 and the viewer separation layer 36.

As shown in Fig. 15, an observation point Q (the right eye 10R or the left eye 10L) is located at a position separated by the viewing distance D. Here, four observation points (Q1, Q2, Q3, Q4) are assumed in order from the right-hand side in the figure. For example, the observation point Q1 is positioned in front of the pixel P7 of the display 30 via the slit part 17 (hereinafter, referred to as first slit part 17a). Therefore, the pixel P7 can be seen from the observation point Q1 through a center Ca of the first slit part 17a. Moreover, the pixels P6 and P8 cannot be seen from the observation point Q1, shielded by the barrier parts 18.

At the observation point Q2 moved from the observation point Q1 leftwards, the pixel P5 can be seen through a center Cb of a second slit part 17b on the left next to the first slit part 17a. It should be noted that at the observation point Q2, the pixels P6 and P7 cannot be seen, shielded by the barrier part 18. Moreover, at the observation point Q3 moved from the observation point Q2 leftwards, the pixel P6 can be seen through the center Cb of the second slit part 17b. It should be noted that at the observation point Q3, the pixels P5 and P7 cannot be seen, shielded by the barrier part 18.

In addition, at the observation point Q4 moved from the observation point Q3 leftwards, the pixel P7 can be seen through the center Cb of the second slit part 17b. That is, at the observation point Q4, the pixel P7 can be visually recognized as at the observation point Q1. According to such a principle, the image (pixel) seen from the observation point Q4 is the same as the image (pixel) seen from the observation point Q1. This means that a viewing field capable of viewing a certain image is repeated. In this case, the distance between the observation point Q1 and the observation point Q4 is the viewing field repetition interval Wn.

As shown in Fig. 15, the pixel P7, the center Ca of the first slit part 17a, and the center Cb of the second slit part 17b form a right triangle having Ca-Cb as its bottom. Moreover, the pixel P7, the observation point Q1, and the observation point Q4 form a right triangle having Q1-Q4 as its bottom. These right triangles are congruent. Moreover, the distance between the pixel P7 and Ca is the distance dn between the display 30 and the barrier element 16. The distance between Ca and Cb is the barrier pitch pn. The distance between the pixel P7 and the observation point Q1 is the viewing distance D. Moreover, the distance between the observation point Q1 and the observation point Q4 is the above-mentioned viewing field repetition interval Wn. Thus, the following expression is established.

$$dn = (D/Wn) \times pn \qquad \qquad \cdots (1)$$

For example, by setting the viewing distance D, the viewing field repetition interval Wn, and the barrier pitch pn, the distance dn between the display 30 and the barrier element 16 is determined in accordance with Expression (1). Here, the barrier pitch pn is a parameter for determining the resolution of the image to be visually recognized by the user 1, and is, for example, set to be a value substantially the same as the fineness of the pixel (here, the size of the pixel in the horizontal direction). Therefore, a barrier pitch p1 of the both-eye separation layer 35 and a barrier pitch p2 of the viewer separation layer 36 are favorably set to be relatively close values.

It should be noted that in Fig. 13 described above, for the sake of easy understanding, the distance (barrier pitch p2) between the slit parts 17 in the viewer separation layer 36 is made sufficiently larger than the distance (barrier pitch p1) between the slit parts 17 in the both-eye separation layer 35. In practice, the barrier pitch p1 and the barrier pitch p2 are both set to be values close to the size of the pixel in the horizontal direction of the display 30.

Applying Expression (1) to the both-eye separation layer 35, the following expression is obtained as n = 1.

$$d1 = (D/W1) \times p1 \qquad \qquad \cdots (2)$$

Where W1 is the viewing field repetition interval in the both-eye separation layer 35. The both-eye separation layer 35 is configured to separate the viewing field for the both eyes of the human. Here, the distance between the viewing field of the right eye 10R and the viewing field of the left eye 10L is, for example, set to be a personal distance (about 6.5cm) of the human. Moreover, the viewing field of the right eye 10R and the viewing field of the left eye 10L are repeated in the horizontal direction. Thus, a viewing field repetition interval W1 in the both-eye separation layer 35 is substantially twice the personal distance of the human.

Also, applying Expression (1) to the viewer separation layer 36, the following expression is obtained as n = 2.

$$d2 = (D/W2) \times p2 \qquad \qquad \cdots (3)$$

Where W2 is a viewing field repetition interval in the viewer separation layer 36. The viewer separation layer 36 is configured to separate the viewing field for each of the plurality of users 1. Therefore, an distance between viewing fields of users 1 adjacent to each other is, for example, set to a personal distance (about 70cm) of the human. Moreover, the viewing fields of the user 1 adjacent to each other are repeated in the horizontal direction. Thus, a viewing field repetition interval W2 in the viewer separation layer 36 is substantially twice the personal distance of the human.

In this manner, comparing the viewing field repetition interval W1 in the both-eye separation layer 35 with the viewing field repetition interval W2 in the viewer separation layer 36, W2 is sufficiently larger than W1 (W2 >> W1). On the other hand, as described above, the barrier pitch p1 of the both-eye separation layer 35 and the barrier pitch p2 of the viewer separation layer 36 are set to be relatively close values (p1 ≈ p2) .

Therefore, comparing the distance d1 and the distance d2 from Expression (2) and Expression (3), d1 is a value larger than d2 (d1 ≥ d2). In this manner, the distance d1 between the display 30 and the both-eye separation layer 35 is favorably larger than the distance d2 between the display 30 and the viewer separation layer 36. Accordingly, for example, without decreasing the resolution, it is possible to suitably separate left and right viewing fields for each user 1.

For example, the distance d2 between the display 30 and the viewer separation layer 36 is set to be a value that is substantially several 100 micrometer, and the distance d1 between the display 30 and the both-eye separation layer 35 is set to be a value that is substantially several millimeter.

It should be noted that the magnitude relationship between the distance d1 and the distance d2 is not limited to a case where the both-eye separation layer 35 or the viewer separation layer 36 is constituted by the barrier elements 16, and also applied to a case where the lenticular lens is used.

By the way, the lenticular lens generally needs to ensure a focal distance of the lens. Therefore, it can be said that the lenticular lens is an element difficult to be used near the display 30. In contrast, since the barrier elements 16 do not have restrictions such as a focal distance, it is possible to arrange them in proximity to the display screen 31 of the display 30. In view of this point, it can be said that the barrier elements 16 are elements that easily increase the viewing field repetition interval.

The viewer separation layer 36 is required to decrease the distance d2 from the display 30 because it is necessary to set the viewing field repetition interval W2 to be relatively large. Therefore, the viewer separation layer 36 is favorably constituted by the barrier elements 16. Accordingly, it is possible to introduce the function that separates the viewing field of the user 1 without increasing the thickness of the display unit 22.

On the other hand, the barrier elements 16 may decrease the brightness of the image in order to shield the light beam. In contrast, it is possible to brightly display the image because it is an element that bends the light beam in the lenticular lens. For example, the both-eye separation layer 35 does not necessarily need to be constituted by the barrier elements 16 because the distance d1 to the display 30 relatively increases. On the contrary, the use of the barrier elements 16 can also decrease the brightness of the image. Therefore, the both-eye separation layer 35 is favorably constituted by the lenticular lens. Accordingly, it is possible to increase the brightness of the image, and it is possible to realize bright stereoscopic display and the like due to the binocular stereoscopic vision.

[Arrangement Example of Both-Eye Separation Layer and Viewer Separation Layer]

Hereinabove, the configuration in which the two light beam control layers (the both-eye separation layer 35 and the viewer separation layer 36) are arranged on the side (front side) of the display screen 31 of the display 30 has been mainly described. For example, in a see-through-type display 30 used together with a backlight 38, it is also possible to arrange the light beam control layer on the side (rear side) of the back surface 32 of the display 30.

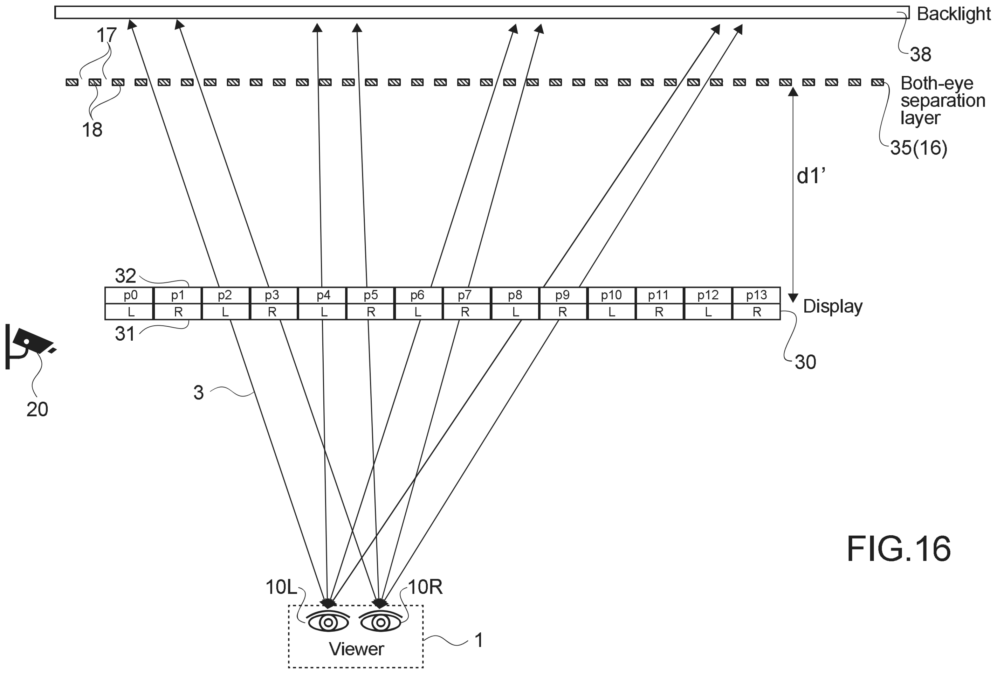

Fig. 16 is a schematic diagram showing another arrangement example of the light beam control layer. Here, a configuration in which only the both-eye separation layer 35 is provided as the light beam control layer will be taken as an example. For example, this is another configuration example of the display apparatus 120 for one person described above with reference to Fig. 9 and the like. In Fig. 16, on the side of the back surface 32 of the display 30, the both-eye separation layer 35 constituted by the barrier elements 16 and the backlight 38 are arranged in the stated order. The light emitted from the backlight 38 is radiated to the back surface 32 of the see-through-type display 30 via the both-eye separation layer 35. As a result, the image light 3 modulated for each pixel is emitted from the display screen 31 of the display 30.

The light that enters the display 30 is light that has transmitted the slit parts 17 of the both-eye separation layer 35. Its travelling direction is, for example, maintained also when it is emitted from the display 30. That is, in a case where the pixel of the display 30 is seen from the right eye 10R (or the left eye 10L) of the user 1, if there is a slit part 17 on the extension of the line of sight (that is, if the backlight 38 is seen through the pixel), the image light 3 modulated in that pixel can be visually recognized. On the contrary, if there is a barrier part 18 on the extension of the line of sight seeing a pixel, light from the backlight 38 does not reach and the image light 3 modulated by that pixel cannot be visually recognized.

By using such characteristics, the both-eye separation layer 35 is enabled to assign the pixels of the display 30 to the right eye 10R and the left eye 10L of the user 1 and separate the image to be displayed on the display 30 into the image for the right eye and the image for the left eye. For example, in Fig. 16, the pixels of the pixels (p0, p1, ... p13), which are visible to the right eye 10R and the left eye 10L on the display 30, are as follows.

Pixels (p1, p3, p5, p7, p9, p11, p13) visible to the right eye 10R
Pixels (p0, p2, p4, p6, p8, p10, p12) visible to the left eye 10L

It should be noted that in Fig. 16, the case where the light beam control layer is the both-eye separation layer 35 has been described, though the viewer separation layer 36 can also be described similarly. Moreover, the both-eye separation layer 35 or the viewer separation layer 36 may be the barrier elements 16 or may be the lenticular lens. In this manner, in a case where a see-through-type device like an LCD is used as the display 30, it is possible to constitute the display apparatus (LFD) also if the light beam control layer is arranged on the rear side of the display 30 (on a side opposite to the user 1 as viewed from the display 30). That is, the light beam control layer may be arranged on the front or rear side of the see-through-type display 30.

Fig. 17 is a schematic diagram showing an arrangement example of the both-eye separation layer 35 and the viewer separation layer 36 with respect to the see-through-type display 30. Fig. 17 schematically shows a cross-section configuration example of four display units 22a to 22d in which the arrangement of the both-eye separation layer 35 and the viewer separation layer 36 is different from each other. Each of the display units 22a to 22d includes the backlight 38, the display 30, the both-eye separation layer 35, and the viewer separation layer 36.

The backlight 38 is a light that radiates light onto the display 30 and is configured to be capable of irradiating the entire back surface 32 of the display 30 with light. The display 30 is a see-through-type display that modulates light from the backlight 38 and is typically an LCD panel.

Also, each of the display units 22a to 22d includes the first transparent base material 33a for fixing the both-eye separation layer 35 and the second transparent base material 33b for fixing the viewer separation layer 36. The first transparent base material 33a and the second transparent base material 33b secure the distance (d1 or d2) between the display 30 and each light beam control layer. It should be noted that the backlight 38 is arranged with a constant space with respect to a laminate consisting of the display 30 and the light beam control layer. Alternatively, the backlight 38 may be fixed to the laminate by using the transparent base material and the like.

In the display unit 22a and the display unit 22b, the display 30 is arranged between the viewer separation layer 36 and the both-eye separation layer 35. That is, a structure in which the display 30 is sandwiched by the two light beam control layers is provided. In this manner, the configuration in which the light beam control layers are provided on the side of the display screen 31 and the back surface 32 of the display 30 is easy to be positioned or bonded to the pixel, for example. Accordingly, it is possible to accurately and easily arrange the viewer separation layer 36 and the both-eye separation layer 35 with respect to the display 30.

In the display unit 22a, the viewer separation layer 36 is arranged between the display 30 and the backlight 38 and the both-eye separation layer 35 is arranged on a side of the display 30, which is opposite to the backlight 38. More specifically, the viewer separation layer 36 is fixed to the back surface 32 of the display 30 via the second transparent base material 33b. Moreover, the both-eye separation layer 35 is fixed with respect to the display screen 31 of the display 30 via the first transparent base material 33a. The configuration like the display unit 22a is easy to be manufactured. In addition, since the foremost surface of the display unit 22a directed to the user 1 is the both-eye separation layer 35, it can be constituted by the lenticular lens. Accordingly, it is possible to show a bright image with less blurring to the user 1. It should be noted that the viewer separation layer 36 on the side of the back surface 32 is constituted by the barrier element. Accordingly, it is possible to easily realize separation of the viewing field 11 for each user 1.

In the display unit 22b, the viewer separation layer 36 is arranged on a side of the display 30, which is opposite to the backlight 38, and the both-eye separation layer 35 is arranged between the display 30 and the backlight 38. More specifically, the viewer separation layer 36 is fixed with respect to the display screen 31 of the display 30 via the second transparent base material 33b. Moreover, the both-eye separation layer 35 is fixed to the back surface 32 of the display 30 via the first transparent base material 33a. In the configuration like the display unit 22b, the both-eye separation layer 35 with a relatively large distance (d1) from the display 30 is arranged between the display 30 and the backlight 38. Accordingly, for example, it is possible to decrease the total thickness of the display unit 22b.

In the display unit 22c and the display unit 22d, the two light beam control layers are provided on one side of the display 30. Specifically, the viewer separation layer 36 is arranged between the display 30 and the both-eye separation layer 35. In this manner, by providing the light beam control layers on one of the display screen 31 and the back surface 32 of the display 30, it is possible to achieve reduction in thickness or size of the apparatus, for example.

In the display unit 22c, the both-eye separation layer 35 is arranged on a side of the display 30, which faces to the backlight 38. Moreover, the viewer separation layer 36 is arranged between the display 30 and the both-eye separation layer 35. More specifically, the viewer separation layer 36 is fixed to the back surface 32 of the display 30 via the second transparent base material 33b. Moreover, the both-eye separation layer 35 is fixed to the rear side of the viewer separation layer 36 via the first transparent base material 33a. In the configuration like the display unit 22c, the both-eye separation layer 35 and the viewer separation layer 36 are arranged between the display 30 and the backlight 38. Accordingly, for example, it is possible to make the total thickness of the display unit 22b sufficiently small. Moreover, in the display unit 22c, the pixels of the display 30 (display screen 31) that displays the image are located on the foremost surface on the side of the user 1, and there are no factors that cause blurring on the optical path to the user 1. Therefore, blurring of images is greatly reduced, and it is possible to perceive a clear three-dimensional image.

On the display unit 22d, the both-eye separation layer 35 is arranged on a side of the display 30, which is opposite to the backlight 38. Moreover, the viewer separation layer 36 is arranged between the display 30 and the both-eye separation layer 35. More specifically, the viewer separation layer 36 is fixed with respect to the display screen 31 of the display 30 via the second transparent base material 33b. Moreover, the both-eye separation layer 35 is fixed to the front side of the viewer separation layer 36 via the first transparent base material 33a. The configuration of the display unit 22d is similar to the configuration as described above with reference to Figs. 3 and 13. In such a configuration, since the both-eye separation layer 35 is arranged on the foremost surface, it is possible to show a bright image with less blurring to the user 1, for example, as in the display unit 22a.

[Light Beam Control by Backlight]

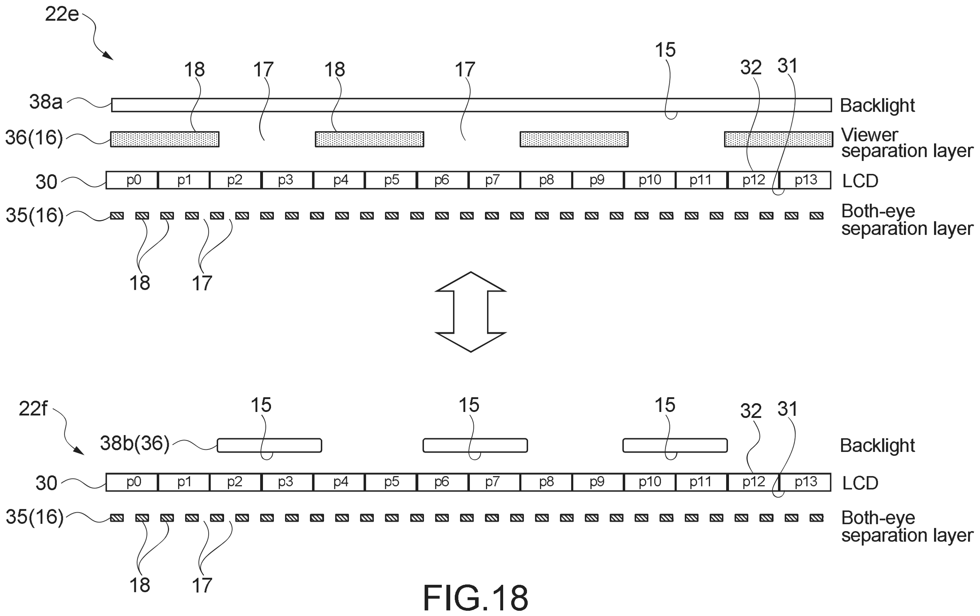

Fig. 18 is a schematic diagram showing another configuration example of the viewer separation layer 36. The upper side and the lower side in Fig. 18 schematically show cross-section configurations of a display unit 22e and a display unit 22f. In the display unit 22e, a full-lighting-type backlight 38a, the viewer separation layer 36, the see-through-type display 30, and the both-eye separation layer 35 are provided in order from the rear side. The full-lighting-type backlight 38a is, for example, a light-emitting element whose entire surface directed to the display 30 is a light-emitting region 15. For example, the backlight 38 shown in Fig. 17 is basically the full-lighting-type backlight 38a. Moreover, the structure of the display unit 22e is, for example, similar to a structure of the display unit 22a shown in Fig. 17.

A partial lighting-type backlight 38b, the see-through-type display 30, and the both-eye separation layer 35 are provided in the display unit 22f in order from the rear side. The partial lighting-type backlight 38b is light-emitting elements whose some surfaces directed to the display 30 are light-emitting regions 15. The plurality of light-emitting regions 15 is formed on the backlight 38b.

The pattern of the plurality of light-emitting regions 15 provided in the backlight 38b is, for example, configured to be similar to a stripe pattern formed by the slit parts 17 of the viewer separation layer 36 provided in the display unit 22e. That is, the region in which the slit parts 17 are provided in the display unit 22e is the light-emitting regions 15 of the backlight 38 in the display unit 22f.

Accordingly, since each light-emitting region 15 is a region that emits light as in the slit part 17, the backlight 38b as a result functions as the viewer separation layer 36. In this case, in the display unit 22f, a configuration equivalent to the display unit 22e is realized. That is, the partial lighting-type backlight 38b configured to be capable of light beam control can replace the configuration in which the full-lighting-type backlight 38a and the barrier elements 16 (here, the viewer separation layer 36) are combined.

In this manner, in the display unit 22f, the viewer separation layer 36 is the backlight 38b that includes the plurality of light-emitting regions 15 that forms the stripe pattern and irradiates the display 30 with light from the plurality of light-emitting regions 15. Accordingly, for example, it is possible to reduce the power consumption of the apparatus because it is sufficient to light up only a necessary region. Moreover, it is possible to reduce the step of assembling because the number of components decreases.

It should be noted that in Fig. 18, the configuration in which the viewer separation layer 36 is realized by the partial lighting-type backlight 38b has been described, though the both-eye separation layer 35 may be realized by the partial lighting-type backlight 38b. Such a configuration can be applied to the display unit 22b or the display unit 22c in Fig. 17, for example.

[Self-Light-emitting-Type Display]

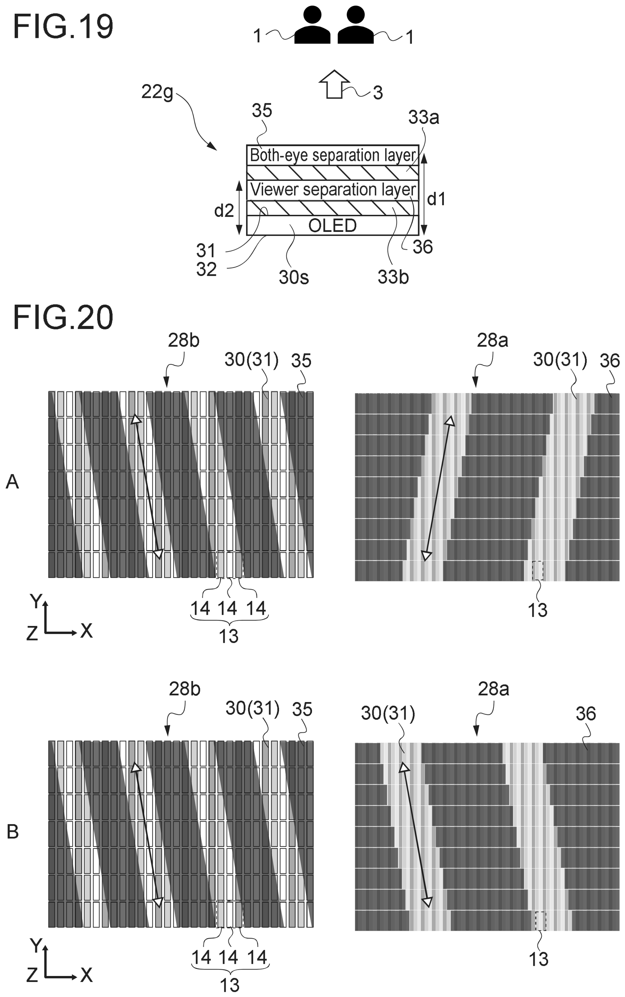

Fig. 19 is a schematic diagram showing an arrangement example of the both-eye separation layer and the viewer separation layer with respect to the self-light transmissive-type display. A display 30s that constitutes a display unit 22g shown in Fig. 19 is a self-light-emitting-type display that emits light from the display screen 31. A display panel constituted by OLED, LED, and the like is used as the display 30s. In this case, it is unnecessary to provide the backlight.

The display unit 22g includes the viewer separation layer 36 and the both-eye separation layer 35 in addition to the display 30s. As shown in Fig. 19, the viewer separation layer 36 and the both-eye separation layer 35 are arranged on the side of the display screen 31 of the display 30s. That is, in a case where the self-light transmissive-type display 30s is used, the light beam control layer (viewer separation layer 36 or both-eye separation layer 35) can be arranged only on the side of the display screen 31.

Here, the distance d2 between the display 30 and the viewer separation layer 36 is also shorter than the distance d1 between the display 30 and the both-eye separation layer 35. Therefore, the viewer separation layer 36 and the both-eye separation layer 35 are arranged in the stated order on the side of the display 30s of the display screen 31. Accordingly, it is possible to suitably control the direction of the image light 3 emitted from the display 30s. Moreover, the use of the self-light transmissive-type display 30s enables the plurality of users 1 to perceive a three-dimensional image or the like with clear light and dark areas, for example.

[Configuration Example of Stripe Pattern]

Fig. 20 is a schematic diagram showing an example of stripe patterns of the both-eye separation layer and the viewer separation layer. A and B of Fig. 20 schematically show plan views of the both-eye separation layer 35 and the viewer separation layer 36 as viewed from the direction (Z-axis direction) orthogonal to the display screen 31 (XY-plane) of the display 30. It should be noted that the plan views of the both-eye separation layer 35 and the viewer separation layer 36 have different scales.

Also, a plan view of the display 30 is shown together with the both-eye separation layer 35 and the viewer separation layer 36. A plurality of pixels 13 arranged in a grid form along the vertical direction (Y-axis direction) and the horizontal direction (X-axis direction) of the display screen 31 is provided in the display 30. For example, a single pixel 13 is constituted by three types of sub-pixels 14 corresponding to RGB color light. Such pixels 13 are arranged in a grid form. It should be noted that the method of arranging the pixel 13 is not limited, and any arrangement method may be used.

The viewer separation layer 36 includes a first stripe pattern 28a for separating the display image. Here, the display image refers to the image to be displayed on the display 30. The first stripe pattern 28a is, for example, a pattern for separating the display image into images respectively displayed to the plurality of users 1.

Also, the both-eye separation layer 35 includes a second stripe pattern 28b for separating the display image. The second stripe pattern 28b is, for example, a pattern for separating the display image into an image for the actual user 1 to see by the right eye 10R and an image for the actual user 1 to see by the left eye 10L.

The first stripe pattern 28a and the second stripe pattern 28b are patterns in which stripe-like regions with a predetermined width are periodically arranged. In a case where the barrier element is used as the viewer separation layer 36 or the both-eye separation layer 35, the stripe-like regions correspond to regions where slit parts (or barrier parts) are provided. For example, the distance between the stripe-like regions as viewed in the X direction in the first stripe pattern 28 is the barrier pitch p1 and the distance between the stripe-like regions as viewed in the X direction in the second stripe pattern 28 is the barrier pitch p2. Moreover, in a case where the lenticular lens is used as the viewer separation layer 36 or the both-eye separation layer 35, the stripe-like regions correspond to a region where elongated convex lenses are arranged.

In the present embodiment, as viewed from the direction (Z-axis direction) orthogonal to the display screen 31 (XY-plane) of the display 30, the direction of the first stripe pattern 28a intersects with the direction of the second stripe pattern 28b. Here, the direction of the first stripe pattern 28a (second stripe pattern 28b) is a direction in which the stripe-like regions extend. In Fig. 20, the direction of the first stripe pattern 28a and the direction of the second stripe pattern 28b are schematically shown by the white arrows.

The viewer separation layer 36 and the both-eye separation layer 35 are configured so that the directions of the respective stripe patterns intersect with each other as viewed from the Z-axis direction, i.e., the respective directions are not parallel to each other. Since the directions of the stripe patterns are not parallel in this manner, it is possible to suppress generation of moire and the like.

Moreover, the direction of the first stripe pattern 28a and the direction of the second stripe pattern 28b are arranged, inclined with respect to the pixel array of the display 30. That is, the stripe pattern is not identical to the vertical direction (Y direction) or the vertical direction (X direction) of the display screen 31. Accordingly, the pixels 13 of the display 30 appear uniform across the entire screen. Moreover, it is possible to suppress generation of moire and the like between the display 30 and the viewer separation layer 36 (or the both-eye separation layer 35).

In the example shown in A of Fig. 20, the direction of the first stripe pattern 28a is a direction inclined on a side opposite to the direction of the second stripe pattern 28b by using the vertical direction (Y-axis direction) of the display screen 31 as a reference. For example, in the viewer separation layer 36 shown on the right-hand side in A of Fig. 20, the direction of the first stripe pattern 28a is inclined toward the lower left from the upper right in the figure and is a direction obtained by inclining the Y-axis direction rightwards. Moreover, in the both-eye separation layer 35 shown on the left-hand side in A of Fig. 20, the direction of the second stripe pattern 28b is inclined from the upper left to the lower right in the figure and is a direction obtained by inclining the Y-axis direction leftwards.

In this manner, in A of Fig. 20, the first stripe pattern 28a is inclined in an opposite direction to the second stripe pattern 28b with respect to the Y-axis direction. In such a combination of the opposite directions, for example, the angle of intersection between the respective stripe patterns increases, and it is possible to sufficiently suppress generation of moire and the like. Moreover, for example, since the image light 3 is sufficiently separated, it is possible to realize high resolution.

In the example shown in B of Fig. 20, the direction of the first stripe pattern 28a is a direction inclined on the same side as the direction of the second stripe pattern 28b with respect to the vertical direction (Y-axis direction) of the display screen 31. For example, in B of Fig. 20, the direction of the first stripe pattern 28a and the direction of the second stripe pattern 28b are both inclined from the upper left to the lower right in the figure and are directions obtained by inclining the Y-axis direction leftwards. It should be noted that the direction of the first stripe pattern 28a and the direction of the second stripe pattern 28b are not parallel.

In this manner, in B of Fig. 20, the first stripe pattern 28a and the second stripe pattern 28b are inclined in the same direction with respect to the Y-axis direction. Even with such a combination of the forward directions, it is possible to suppress generation of moire and the like by intersecting the respective stripe patterns to each other.

In addition, an angle of tilt of each stripe pattern (e.g., a smaller angle of the angles of intersection with the Y-axis direction) is set as appropriate in accordance with a balance such as a resolution in the horizontal direction (horizontal resolution), a resolution in the vertical direction (vertical resolution), and a degree of moire.

[Control of Stripe Patterns of Viewer Separation Layer 36]

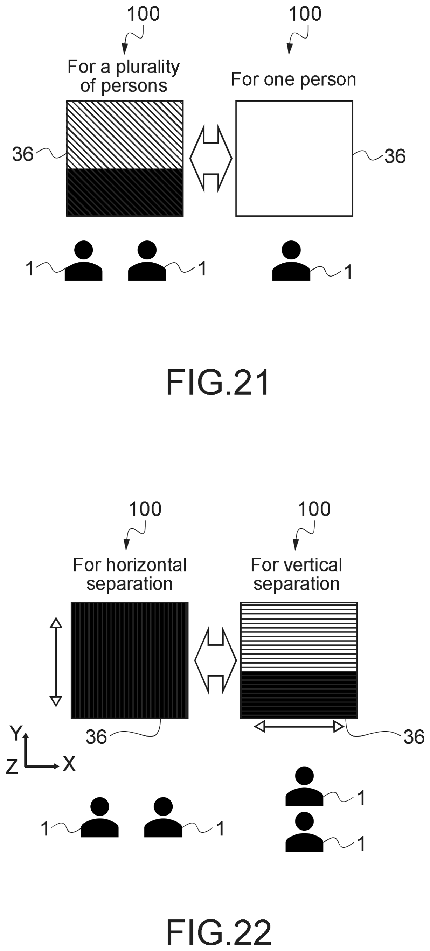

Fig. 21 is a schematic diagram showing an application example of the viewer separation layer 36 capable of controlling the stripe patterns. Fig. 22 is a schematic diagram showing another application example of the viewer separation layer 36 capable of controlling the stripe patterns. In Figs. 21 and 22, an element capable of electrically controlling the stripe pattern is used as the viewer separation layer 36. Moreover, the processor 24 controls the operation of the viewer separation layer 36. It should be noted that in Figs. 21 and 22, only the viewer separation layer 36 of the configurations of the first display apparatus 100 is shown.

As the element capable of electrically controlling the stripe pattern, an LCD panel capable of controlling the transmissive regions and the light-shielding regions is used. In this case, the first stripe pattern 28a is formed by controlling the LCD panel to alternately generate stripe-like transmissive regions that transmit light entering from the back surface and stripe-like light-shielding regions that shield light entering from the back surface. It should be noted that the LCD panel is an element different from the above-mentioned display 30.

Moreover, as the element capable of electrically controlling the stripe pattern, a variable backlight capable of controlling a light-emitting region that emits light and a non-light-emitting region that does not emit light may be used. In this case, the first stripe pattern 28a is formed by controlling the variable backlight to alternately generate a stripe-like light-emitting region and a stripe-like non-light-emitting region. In the configuration using the variable backlight, the see-through-type display 30 is used (see Fig. 18).

In Fig. 21, the viewer separation layer 36 is configured to be capable of electrically controlling ON or OFF of the first stripe pattern 28. Here, the state in which the first stripe pattern 28 is ON refers to a state in which the first stripe pattern 28 is formed in the viewer separation layer 36. In this case, the viewer separation layer 36 functions as a light beam control layer that separates an image for each user 1. Moreover, the state in which the first stripe pattern 28 is OFF refers to a state in which the entire surface of the viewer separation layer 36 is a transmissive region (or light-emitting region) without forming the first stripe pattern 28 in the viewer separation layer 36. In this case, the viewer separation layer 36 does not function as the light beam control layer.

Also, in Fig. 21, the processor 24 switches ON and OFF of the first stripe pattern 28 in accordance with the number of users 1. For example, as shown on the right-hand side of Fig. 21, the processor 24 controls the viewer separation layer 36 so that the first stripe pattern 28 is turned off in a case where the user 1 is one. In this case, the first display apparatus 100 no longer has the function of separating the image for each user 1, it is possible to assign all pixels of the display 30 to the one user 1. As a result, it is possible to increase the resolution of the image for the right eye and the image for the left eye and to make the one user 1 perceive a high-resolution three-dimensional image.

Also, for example, as shown in the left-hand side of Fig. 21, the processor 24 controls the viewer separation layer 36 so that the first stripe pattern 28 is turned on in a case where the number of users 1 is two or more. In this case, the first display apparatus 100 is enabled to exert the function of separating the image for each user 1 and make each of the plurality of users 1 perceive a three-dimensional image by means of binocular stereoscopic vision.

In Fig. 22, the viewer separation layer 36 is configured to be capable of electrically controlling the direction of the first stripe pattern 28. By controlling the direction of the first stripe pattern 28, it is possible to control the display position of the image separated for each user 1, for example.

In view of this, the processor 24 controls the viewer separation layer 36 to change the direction of the first stripe pattern 28 on the basis of the user position information. The user position information is information indicating the positions of the plurality of users 1 who uses the first display apparatus 100 and is obtained by the viewpoint detection unit 50 as described above with reference to Fig. 12, for example. The user position information includes the coordinates of the right eye 10R and the left eye 10L of each user 1, the position of the face of each user 1, and the like. The processor 24 controls the direction of the first stripe pattern 28 in accordance with the position relationship of the plurality of users 1 indicated by that information and displays the image separated for each user 1.

For example, on the left-hand side of Fig. 22, the two users 1 are arranged in the horizontal direction (Y-axis direction). In this case, the direction of the first stripe pattern 28 is set in the vertical direction (X-axis direction). That is, in a case where a plurality of persons is arranged in the horizontal direction, barriers alternately aligned in the horizontal direction are formed. Accordingly, the display position of the image separated for each user 1 is a position different in coordinates in the horizontal direction, and it is possible to display different images to the two users 1 aligned in the horizontal direction.

Also, on the right-hand side of Fig. 22, the two users 1 are aligned in the vertical direction (X-axis direction). That is, in a case where a plurality of persons is arranged in the perpendicular direction, barriers are alternately formed in the perpendicular direction. In this case, the direction of the first stripe pattern 28 is set in the horizontal direction (Y-axis direction). Accordingly, the display position of the image separated for each user 1 is a position whose coordinates in the vertical direction is different, and it is possible to display different images to the two users 1 aligned in the vertical direction.

For example, in a case where the other user 1 is looking at the screen behind the one user 1, the positions of the faces of the respective users 1 in the horizontal direction can be almost the same. In such a case, each user 1 views the same image even when the image is separated in the horizontal direction as on the left-hand side of Fig. 22. On the other hand, by separating the image in the vertical direction as on the right-hand side of Fig. 22, for example, it is possible to make the user 1 on the upper side and the user 1 on the lower side perceive a three-dimensional image representing a display target (3D object, etc.) as viewed from a different angle of elevation.

Otherwise, a method of controlling the first stripe pattern 28 of the viewer separation layer 36 is not limited. For example, it is possible to set the interval and width of the first stripe pattern 28 in accordance with a distance from the user 1 and the number of users 1. Accordingly, for example, even in a case where the positions of the users 1 or the number of users 1 changes, it is possible to make each user 1 suitably perceive a three-dimensional image.

[Second Display Mode]

Hereinabove, the display mode (first display mode) that generates the image for the right eye and the image for the left eye for each of the plurality of users 1 and displays those images on the display 30 has been mainly described. The first display apparatus 100 can be operated on a display mode different from the first display mode.

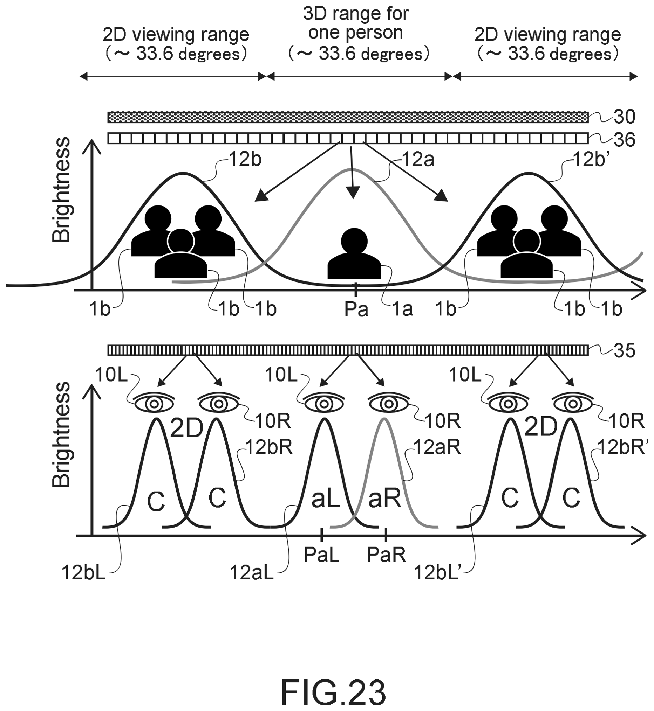

Fig. 23 is a schematic diagram describing light beam control on a second display mode. The second display mode is, for example, a display mode that displays the parallax images (the image for the left eye and the image for the right eye) to the one user 1 of the plurality of users 1 who uses the first display apparatus 100 and displays the two-dimensional image to the other user 1. In the present disclosure, the two-dimensional image may be considered as an image for a non-stereoscopic vision image or 2D viewing including no parallax images.

Hereinafter, it is assumed that the user 1 who is a target to which a parallax image is displayed is the first user 1a. The first user 1a is, for example, a main user of the first display apparatus 100 and is the user 1 who can see the three-dimensional image by means of binocular stereoscopic vision, that is, the user 1 who performs 3D viewing. In Fig. 23, the first user 1a is schematically shown at the center of the upper figure.

Also, it is assumed that the user 1 who is a target to which a two-dimensional image is displayed is the second user 1b. The second user 1b is the user 1 different from the first user 1a and is the user 1 who performs 2D viewing. It should be noted that the two-dimensional image is an example of the image for the second user. For example, in a case where the number of users 1 is two, the user 1 who is not the first user 1a is the second user 1b. Moreover, in a case where the user 1 is three or more, all users 1 other than the first user 1a are described as the second user 1b. In Fig. 23, three users 1 who are the second users 1b are schematically shown on the right-hand side and the left-hand side of the first user 1a.

The upper graph of Fig. 23 is a schematic graph showing an intensity distribution of the image light 3 separated by the viewer separation layer 36. Moreover, the lower graph in Fig. 23 is a schematic graph showing an intensity distribution of the image light 3 separated by the both-eye separation layer 35.

In the upper graph of Fig. 23, three peaks are formed by the image light 3 separated by the viewer separation layer 36. The central peak 12a among them is, for example, a peak formed by the image light 3 traveling toward the observation viewpoint Pa of the first user 1a. Moreover, a peak 12b formed on the left-hand side of the peak 12a and a peak 12b' formed on the right-hand side are, for example, peaks formed by the image light 3 other than the image light 3 traveling toward the peak 12a. The center positions of the peak 12b and the peak 12b' are, for example, positions separated from the observation viewpoint Pa by a predetermined distance (personal distance, etc.).

Also, the peak 12b and the peak 12b' are formed by the viewer separation layer 36 repeating the viewing field at the predetermined interval. Thus, pixels that emit the image light 3 that constitutes the peak 12b and the peak 12b' are the same pixel. It should be noted that pixels that emit the image light 3 that constitutes the peak 12a and the peak 12b (or the peak 12b') is basically different pixels.

In the graph on the lower side in Fig. 23, the image light 3 which is the peak 12a, the peak 12b, and the peak 12b' in the upper graph is separated into two peaks corresponding to the right eye 10R and the left eye 10L of each human by the both-eye separation layer 35. For example, the peak 12a is separated into the peak 12aR having the right eye viewpoint PaR of the first user 1a as the center and the peak 12aL having the left eye viewpoint PaL of the first user 1a as the center. Moreover, the peak 12b is separated into the peak 12bR on the right-hand side and the peak 12bL on the left-hand side and the peak 12b' is separated into a peak 12bR' on the right-hand side and a peak 12bL' on the left-hand side.

Pixels that are the peak 12aR out of these peaks separated by the both-eye separation layer 35 are used as pixels that display the image for the right eye aR of the first user 1a. Moreover, pixels that are the peak 12aL are used as pixels that display the image for the left eye aL of the first user 1a. Accordingly, the first user 1a is enabled to perform the binocular stereoscopic vision by using the image for the right eye aL and the image for the left eye bL.

On the other hand, on the second display mode, not a parallax image, but a two-dimensional image C is displayed to the second user 1b who is the user 1 other than the first user 1a. That is, pixels that are the peak 12bR and the peak bL (peak 12bR' and peak bL') are both used as pixels that display the two-dimensional image C. Thus, the second users 1b located on both side of the first user 1a perceive the same two-dimensional image C with both the right eye 10R and the left eye 10L.

In this manner, on the second display mode, a range in which the second user 1b performs 2D viewing is formed on both sides of a range in which the first user 1a performs 3D viewing. Then, the stereoscopic display (3D viewing) is provided for the first user 1a and the plane display (2D viewing) is provided for an unspecified number of users 1 (second user 1b) around the first user 1a. Accordingly, the binocular stereoscopic vision for one person and display of the two-dimensional image natural to an unspecified number of other persons become possible. It should be noted that the angle range (here, about 33.6°) of the viewing field separated by the viewer separation layer 36 is an angle range performed by 3D viewing or 2D viewing.

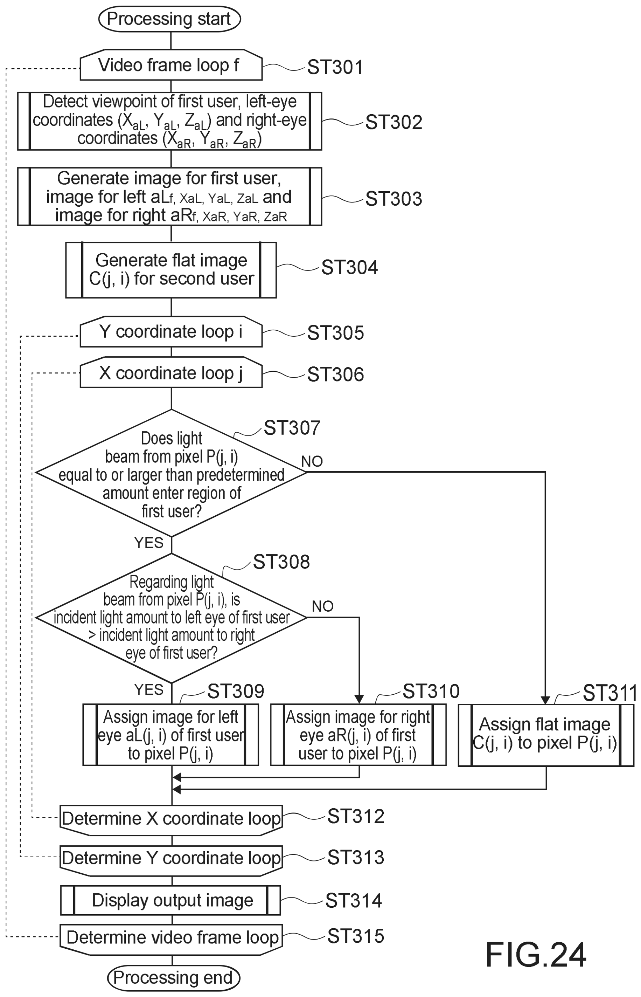

Fig. 24 is a flowchart showing an operation example of the processor 24 on the second display mode.

First of all, the loop related to the video frame is started (Step 301). Next, the viewpoint detection unit 50 executes viewpoint detection processing related to the first user 1a from the captured image captured by the viewpoint detection camera 21 (Step 302). By this processing, the right-eye coordinates (XaR, YaR, ZaR) and the left-eye coordinates (XaL, YaL, ZaL) of the first user 1a are detected.

For example, the viewpoint detection unit 50 detects the user 1 closest to the center among the plurality of users 1 as the first user 1a. Moreover, the user 1 who is the first user 1a may be selected from the captured image via a predetermined GUI, for example. Moreover, for example, the first detected user 1 may be selected as the first user 1a. In addition, a method of selecting the first user 1a is not limited. It should be noted that on the second display mode, viewpoint detection processing about the second user 1b other than the first user 1a is not executed.

On the basis of the detection result of the viewpoint detection unit 50, generation processing for an image to be displayed to the first user 1a (Step 303) is executed. In this processing, the right-eye image generation unit 51a generates the image for the right eye aR directed to the right-eye coordinates (XaR, YaR, ZaR) of the first user 1a for the fth frame. Moreover, the left-eye image generation unit 52a generates the image for the left eye aL directed to the left-eye coordinates (XaL, YaL, ZaL) of the first user 1a for the fth frame.

Next, generation processing for an image to be displayed to the second user 1b (Step 304) is executed. Specifically, the processor 24 generates the two-dimensional image C as the image for the second user. This processing is, for example, executed by a two-dimensional image generation unit (not shown) provided in the processor 24. It should be noted that in the generation processing of the two-dimensional image C, for example, the position information of the second user 1b and the like is not necessarily required.

Here, some examples about the two-dimensional image C will be described. An example of the two-dimensional image C can include an image with a fixed viewpoint with no motion parallax. This is, for example, a two-dimensional image as the 3D object is viewed at the fixed viewpoint (e.g., a viewpoint set to the front of the display unit 22, etc.). Accordingly, since the viewpoint of the image displayed to the second user 1b is fixed, it is possible to provide a stable viewing experience.

Also, an image of an eye of the main 3D viewer (first user 1a) may be used as another example of the two-dimensional image C. That is, the two-dimensional image C is either the image for the right eye aR of the first user 1a or the image for the left eye aL of the first user 1a. In this case, the image displayed to the second user 1b cooperates with the movement of the viewpoint of the first user 1a, and it is possible for the second user 1b to share the range (viewing field) seen by the first user 1a. Moreover, since the image generated in Step 303 can be used as it is, it is possible to reduce the amount of processing of rendering and the like.

Also, the image at the center viewpoint of the both eyes of the main 3D viewer (first user 1a) may be used as another example of the two-dimensional image C. That is, the two-dimensional image C is a center viewpoint image having the center between the right eye 10R and the left eye 10L of the first user 1a of the first user 1a as the viewpoint. For example, the coordinates of that center viewpoint are calculated from the right-eye coordinates and the left-eye coordinates of the first user 1a obtained in Step 302. Then, an image representing the 3D object as viewed from the center viewpoint is generated as the two-dimensional image C. Accordingly, it is possible for the second user 1b to share the front viewing field of the first user 1a.

In this manner, in a case of synchronizing with the movement of the viewpoint of the first user 1a, it is possible for the second user 1b in the vicinity to equally grasp the image of the angle of view viewed by the first user 1a. Accordingly, for example, an application in which the viewing field of an attending physician (first user 1a) in a medical field or the like is simultaneously visually recognized by other staff (second user 1b) is expected.

It should be noted that in a case of synchronizing with the movement of the viewpoint of the first user 1a, the second user 1b may get motion sickness from watching the video because the second user 1b views an image not related to his or her own viewpoint. Therefore, in a case where it is unnecessary to grasp the viewing field of the first user 1a, the use of the two-dimensional image C at the fixed viewpoint and the like provides a more stable viewing experience.

In addition, the examples of the two-dimensional image C are not limited to the above-mentioned example. For example, an image (e.g., a black image, etc.) not related to the image displayed to the first user 1a may be the two-dimensional image C. In this case, it is unnecessary to render the two-dimensional image C, and it is possible to sufficiently reduce the load of the image processing. Moreover, the above-mentioned two-dimensional image C may be switched and used depending on a situation.

When three input images (the image for the right eye aR, the image for the left eye aL, the two-dimensional image C) are generated, the processing of assigning each input image is executed on the pixels of the display 30. First of all, as for the pixel P(j, i) of the display 30, the Yth coordinate loop is started setting the argument to i (Step 305) and the Xth coordinate loop is started setting the argument to j (Step 306).

Next, the output image generation unit 53 determines the incident light amount to the region of the first user 1a from the pixel P(j, i) (Step 307). This processing is processing of determining the pixel P(j, i) associated with the first user 1a. Here, whether or not the incident light amount of the image light 3 to the region of the first user 1a from the pixel P(j, i) is equal to or larger than a predetermined amount is determined. For example, as the incident light amount to the region of the first user 1a, the sum of the incident light amount of the light beam to the right eye 10R and the left eye 10L of the first user 1a from the pixel P(j, i) is calculated. Whether or not the sum of the incident light amount is equal to or larger than the predetermined amount is determined.

In a case where the incident light amount to the region of the first user 1a is equal to or larger than the predetermined amount (YES in Step 307), the pixel P(j, i) is associated with the first user 1a and the incident light amount of the light beam to the right eye 10R and the left eye 10L of the first user 1a is determined (Step 308). Here, whether or not the incident light amount to the left eye 10L is larger than the incident light amount to the right eye 10R is determined with respect to the first user 1a.

In a case where the incident light amount to the left eye 10L of the first user 1a is larger than the incident light amount to the right eye 10R (YES in Step 308), the pixel aL(j, i) of the image for the left eye aL is assigned to the pixel P(j, i) (Step 309). Moreover, in a case where the incident light amount to the left eye 10L of the first user 1a is equal to or smaller than the incident light amount to the right eye 10R (NO in Step 308), the pixel aR(j, i) of the image for the right eye aR is assigned to the pixel P(j, i) (Step 310).

On the other hand, in a case where the incident light amount to the region of the first user 1a is smaller than the predetermined amount (NO in Step 307), the pixel P(j, i) is used as a pixel for displaying an image to the second user 1b. That is, the pixel C(j, i) of the two-dimensional image C is assigned to the pixel P(j, i) (Step 311).

When the assignment of the image to the pixel P(j, i) is completed, the Xth coordinate loop is determined (Step 312). For example, in a case where the argument j has not reached the predetermined value, the processing of Step 306 and subsequent steps is repeated by increasing the value of j by one. In a case where the argument j has reached the predetermined value, the Yth coordinate loop is determined (Step 313). For example, in a case where the argument i has not reached the predetermined value, the processing of Step 305 and subsequent steps is repeated by increasing the value of i by one.

In a case where the argument i has reached the predetermined value, the assignment for all pixels P is completed. Accordingly, a composite image (output image) in which the pixel of any one of three input images (the image for the right eye aR, the image for the left eye aL, and the two-dimensional image C) is assigned to all pixels P is generated. In this case, the display control unit 54 outputs the output image to the display 30 for displaying the output image (Step 314).

Accordingly, the image for the right eye aR is displayed to the right eye 10R of the first user 1a and the image for the left eye aL is displayed to the left eye 10L of the first user 1a. As a result, it is possible for the first user 1a to perceive a three-dimensional image in the fth frame as viewed from the position of the first user 1a. Moreover, the two-dimensional image C is displayed both to the both eyes of the other user (second user 1b) located around the first user 1a. Accordingly, for example, it is possible for the second user 1b to share the viewing field of the first user 1a and observe the 3D object or the like viewed by the first user 1a at the fixed viewpoint.

When the output image is displayed, the video frame loop is determined (Step 315). For example, in a case where the video frame remains, the processing of Step 301 and subsequent steps is repeated by increasing the value of f by one. Moreover, the processing ends if no video frame remains.

In this manner, in the present embodiment, the display mode (second display mode) that generates the image for the right eye aR of the first user 1a and the image for the left eye aL of the first user 1a and the two-dimensional image C targeting the second user 1b and displays these images on the display 30 is executed. Accordingly, while the one user 1 is perceiving the three-dimensional image, the surrounding user 1 visually recognizes the two-dimensional image C. In this manner, by setting a 2D image (same image by the both eyes) as an image displayed to viewers other than the main viewer, it is possible to view an image as in a normal 2D display other than the main viewer.

[Switching of Display Mode]

Hereinafter, a method of switching the display mode will be described. In the present embodiment, the processor 24 switches and executes the plurality of display modes on the basis of the number of users 1. This processing is, for example, executed by a mode control unit (not shown) provided in the processor 24.

For example, the viewpoint detection unit 50 obtains the number of users 1 from the output of the viewpoint detection camera 21. In this case, for example, the number of persons who are facing forward and whose face region is larger than a certain size among the persons included in the captured image is counted. In addition, any method of obtaining the number of users 1 may be used. When the number of users 1 is detected, the display mode is selected in accordance with the number of users 1, and the image to be displayed on the display 30 is controlled.

The plurality of display modes includes the above-mentioned first display mode and the second display mode. The first display mode is a display mode that respectively generates the image for the right eye and the image for the left eye with respect to the first user 1a and the second user 1b and displays these images on the display 30. Thus, it can be said that the first display mode is, for example, a 3D display mode for two persons. The second display mode is a display mode that generates the image for the right eye and the image for the left eye with respect to the first user 1a, generates the two-dimensional image with respect to the second user 1b, and displays these images on the display 30. It can be said that the second display mode is, for example, one-person 3D display + multi-person 2D display mode. In addition, various display modes can be provided as described below.

By switching the image displayed in accordance with the number of users 1 detected by the viewpoint detection camera 21, it is possible to avoid, for example, a state in which an image seen by the others appears to be mixed, i.e., generation of crosstalk. Moreover, it is possible to reduce the electric power by omitting unnecessary image generation processing and achieve high speed image generation processing or the like. Hereinafter, specific display mode control patterns A to F will be described.

The control pattern A is a method of switching the first display mode when the second person is basically detected on the second display mode. That is, the processor 24 executes the second display mode in a case where the number of users 1 is one and executes the first display mode in a case where the number of users 1 is two. Accordingly, for example, a parallax image for the second person is not generated until there are two users 1, and therefore it is possible to reduce the processing load.

The control pattern B is a method of basically setting the first display mode and switching the second display mode in a case where the number of users 1 is three or more. That is, in a case where the number of users 1 is equal to or smaller than two, the processor 24 executes the first display mode, and executes the second display mode in a case where the number of users 1 is three or more. Accordingly, for example, as long as the number of users 1 is two or less, parallax images for two people are always generated, so that it is possible for each user 1 to perceive a high-resolution three-dimensional image at any time. Moreover, in a case where there are three or more users, a common two-dimensional image is displayed to users other than the main user 1. Therefore, it is possible to suppress generation of crosstalk and the like even in a case where the number of users 1 increases, and provide natural viewing experience.

The control pattern C is a method of basically setting the third display mode that performs only 2D display and shifting to the display mode every time a person is detected. Here, the third display mode refers to a display mode that generates only a predetermined two-dimensional image and displays the predetermined two-dimensional image on the display 30. It can be said that it is a display mode that does not any parallax image, and it is a 2D display mode that operates the first display apparatus 100 as a 2D display. For example, in a case where the number of users 1 is zero, the processor 24 executes the third display mode. That is, when the user 1 is not detected, the same two-dimensional image is presented at all viewpoints and no parallax image is generated. Accordingly, unnecessary image generation processing is eliminated, and the electric power can be sufficiently reduced.

In addition, in a case where the number of users 1 is one in the control pattern C, a fourth display mode that presents only the parallax image of the first user 1a who is the main viewer is executed. In this case, the processing load can be reduced because a parallax image and the like for the other viewpoint are generated. Moreover, in a case where the number of users 1 is two, the first display mode is executed and parallax images for two persons are generated. Moreover, in a case where the number of users 1 is three, the second display mode is executed and a parallax image and a two-dimensional image for one person are generated. In this manner, the amount of processing of the image processing is suppressed by finely switching the display mode in accordance with the number of users 1, and it is possible to reduce the power consumption of the apparatus and the like, for example.

The control pattern F is a method of generating and displaying the parallax image to all users 1 also in a case where the number of users 1 is three or more. In this method, the position information of each user 1 is detected every time the user 1 is added, and the parallax image for each user 1 is generated by using the result. In this case, the larger the number of users 1, the lower the resolution of the parallax image (three-dimensional image) that can be displayed. It is possible to simultaneously perceive a three-dimensional image with respect to a large number of users 1. In addition, a control method of switching the display mode is not limited.

Although the number of users 1 is obtained from the output of the viewpoint detection camera 21 in the above description, other methods may be used. For example, it is also possible to obtain the number of users 1 from information input via a predetermined input apparatus. For example, a touch screen, a mouse, a keyboard, a controller, or the like incorporated on the display 30 is used as the input apparatus.

Moreover, the user 1 may manually set the number of persons supported by the first display apparatus 100 via a predetermined user interface (UI). Accordingly, for example, the display mode according to the number of persons supported is selected irrespective of the number of actual users 1. Moreover, it is also possible to select a particular N-number of persons from the UI when a plurality of users 1 is detected. Accordingly, it is possible to constantly execute an optimal display mode with respect to the particular N-number of persons.

Hereinabove, in the first display apparatus 100 according to the present embodiment, a display image including the image for the right eye aR and the image for the left eye aL of the first user 1a generated on the basis of the position information of the first user 1a and the image for the second user (the image for the right eye bR of the second user 1b and the image for the left eye bL or the two-dimensional image C) are displayed on the display 30. Moreover, the display image is separated into the viewpoint of the first user 1a and the viewpoint of the second user 1b by the viewer separation layer 36 and is separated into the image for the left eye and the image for the right eye by the both-eye separation layer 35. With these two layer, it is possible to assign and display the image on the display 30 without any loss to the plurality of users 1 including the first user 1a and the second user 1b. As a result, it is possible to simultaneously provide a high-resolution image including binocular stereoscopic vision to the plurality of users 1.

Fig. 25 is a schematic diagram describing image display by a display apparatus for one person shown as a comparative example. In Fig. 25, a state in which the viewing field is repeated in the display apparatus for one person is schematically shown by a graph of the brightness of the image light 3. The viewing field 11R of the right eye 10R and the viewing field 11L of the left eye 10L are ranges shown by the black arrows. It should be noted that a plurality of peaks included in each viewing field each represents a distribution of image light from an individual pixel.

In the display apparatus 120 for one person, the viewing field 11R of the right eye 10R and the viewing field 11L of the left eye 10L are alternately repeated by the both-eye separation layer 35. The viewing field repetition interval (range indicated by the dotted-line arrow) is a distance obtained by adding the viewing field 11R and the viewing field 11L. Accordingly, all pixels can be assigned to either the right eye 10R or the left eye 10L of the viewer whose viewpoint has been detected. This method can provide a high-resolution 3D video experience, but there is a problem in that the viewer is limited to one. For example, in a case where the other viewer around the main viewer looks at the screen, the image for the left eye may be displayed to the right eye 10R of the other viewer and the image for the right eye may be displayed to the left eye 10L due to the repetition of the viewing field. In this manner, the other viewer can see an unintended image.

Fig. 26 is a schematic diagram describing an image display due to a multi-view-type display apparatus that can be taken as the comparative example. The multi-view type is a display method of displaying a plurality of viewpoint images 19 in a constant angle pitch to enable perception of a three-dimensional image. In Fig. 26, six viewpoint images 19 are displayed. For example, two viewpoint images 19 adjacent to each other of these viewpoint images 19 function as the image for the right eye and the image for the left eye.

In the multi-view-type display apparatus, for example, the number of viewpoint images is fixed, and there is a need for assigning beams other than light beams that enter the both eyes of the actual viewer to the pixels of the display panel. For example, in Fig. 24, one viewer of two viewers is viewing a viewpoint image 19 on the left-hand side and the other viewer is viewing two viewpoint images 19 on the right-hand side. In contrast, two viewpoint images 19 at the center are wasted because there are no viewers. In this manner, with the multi-view type, the number of pixels can be efficiently used, and the resolution per viewpoint decreases.

In the first display apparatus 100 according to the present embodiment, the viewer separation layer 36 that separates the image displayed on the display 30 into the viewpoints of the plurality of users 1 is provided in addition to the both-eye separation layer 35 that separates the image displayed on the display 30 into the image for the left eye and the image for the right eye. For example, only with the both-eye separation layer 35, the left and right viewing fields are repeated as shown in Fig. 25. However, by providing the viewer separation layer 36, it is possible to further separate the viewing field separated by the both-eye separation layer 35 for each user 1.

With such a configuration, it is possible to provide different images to the both eyes of the plurality of users 1, respectively. As a result, for example, with respect to the plurality of users 1, it is possible to simultaneously realize binocular stereoscopic vision on the same screen. Moreover, for example, it is also possible to realize the display mode or the like, perform the stereoscopic display to the one user 1 of the plurality of users 1, and display the two-dimensional image to the other user 1. In this manner, the use of the present technology can independently control the image displayed to the both eyes of the plurality of users 1 and it is possible to implement various display modes.

Moreover, by combining the viewer separation layer 36 with the both-eye separation layer 35, it is possible to assign all pixels on the display 30 to the plurality of users 1. That is, the first display apparatus 100 does not display an image not visually recognized by each user 1 (image seen by no one), and it is possible to use the pixels of the display 30 without waste. Accordingly, for example, as compared to the multi-view type, the resolution per viewpoint is greatly enhanced, and it is possible to realize a high-resolution 3D viewing experience and the like.

<Other Embodiments>

The present technology is not limited to the above-mentioned embodiments, and various other embodiments can be realized.

Hereinabove, the viewpoint detection camera has been described as an example of the sensor that detects the position information of the user. The present technology is not limited thereto, and any sensor capable of detecting the position information of the user may be used. For example, a distance measurement sensor such as a ToF camera, a stereo camera, or a LiDAR may be used. Moreover, a position sensor such as a GPS and a motion sensor such as an IMU may be used. In this case, the position information of the user 1 may be obtained by communicating with a sensor mounted on a portable terminal (smartphone, etc.) owned by the user 1.

Hereinabove, an information processing method according to the present technology is executed by the processor mounted on the first display apparatus. The present technology is not limited thereto, and by cooperation of the processor with another computer capable of communicating therewith via a network or the like, the information processing method and the program according to the present technology are performed and the processor according to the present technology may be configured.

That is, the information processing method and the program according to the present technology may be performed not only in a computer system constituted by a single computer but also in a computer system in which a plurality of computers cooperatively operate. It should be noted that in the present disclosure, the system means a set of a plurality of components (apparatus, module (parts), etc.) and it does not matter whether or not all the components are housed in the same casing. Therefore, both of a plurality of apparatuses housed in separate casings and connected to one another via a network and a single apparatus having a plurality of modules housed in a single casing are the system.

Performing the information processing method and the program according to the present technology by the computer system includes, for example, both of a case where a single computer performs obtention of the user position information, generation of the display image such as the image for the right eye and the image for the left eye of the first user and the image for the second user, and control of the display for displaying the display image, and the like and a case where different computers perform the respective processes. Moreover, performing the respective processes by a predetermined computer includes causing another computer to perform some or all of those processes and obtaining the results.

That is, the information processing method and the program according to the present technology can also be applied to a cloud computing configuration in which a plurality of apparatuses shares and cooperatively processes a single function via a network.

At least two of the features of the present technology described above may be combined. That is, the various features described in the respective embodiments may be arbitrarily combined across the respective embodiments. Moreover, the above-mentioned various effects are merely exemplary, not limitative, and other effects may be exerted.

In the present disclosure, "the same," "equal," "orthogonal," and the like are concepts including "substantially the same," "substantially equal," "substantially orthogonal," and the like. For example, states included in a predetermined range (e.g., range of ±10%) based on "completely the same," "completely equal," "completely orthogonal," and the like are also included.

It should be noted that the present technology can also take the following configurations.

(1) A display apparatus, including:

a display;
a processor configured to

obtain, from an output of a sensor configured to obtain position information in a real space, user position information including position information of a first user,
generate an image for a right eye of the first user and an image for a left eye of the first user on the basis of the position information of the first user,
generate an image for a second user, which is targeting the second user different from the first user, and
control the display to display a display image including the image for the right eye of the first user, the image for the left eye of the first user, and an image for the second user;

a user separation layer that is relatively fixed with respect to a surface of the display and is configured to separate the display image into a viewpoint of the first user and a viewpoint of the second user; and
a left and right image separation layer that is relatively fixed with respect to the surface of the display and is configured to separate the display image into an image for a right eye and an image for a left eye.

(2) The display apparatus according to (1), in which the processor

obtains position information of the second user from the output of the sensor, and
generates an image for a right eye of the second user and an image for a left eye of the second user as the image for the second user on the basis of the position information of the second user.

(3) The display apparatus according to (1), in which
the processor generates a two-dimensional image as the image for the second user.

(4) The display apparatus according to (3), in which
the two-dimensional image is either the image for the right eye of the first user or the image for the left eye of the first user.

(5) The display apparatus according to (3), in which
the two-dimensional image is a center viewpoint image with a viewpoint at a center between the right eye of the first user and the left eye of the first user.

(6) The display apparatus according to at least one of (1) to (5), in which
the processor generates, on the basis of the user position information, a composite image combining images included in the display image and controls the display to display the composite image.

(7) The display apparatus according to at least one of (1) to (6), in which
a distance between the display and the left and right image separation layer is larger than a distance between the display and the user separation layer.

(8) The display apparatus according to (7), further including

> a backlight that radiates light onto the display, in which
> the display is a see-through-type display that modulates light from the backlight and is arranged between the user separation layer and the left and right image separation layer.

(9) The display apparatus according to (8), in which

> the user separation layer is arranged between the display and the backlight, and
> the left and right image separation layer is arranged on a side opposite to the backlight of the display.

(10) The display apparatus according to (7), in which
the user separation layer is arranged between the display and the left and right image separation layer.

(11) The display apparatus according to (10), further including

> a backlight that radiates light onto the display, in which
> the display is a see-through-type display that modulates light from the backlight, and
> the user separation layer and the left and right image separation layer are arranged between the display and the backlight.

(12) The display apparatus according to (7), in which

> the display is a self-light-emitting-type display that emits light from a display screen, and
> the user separation layer and the left and right image separation layer are arranged on a side of the display screen of the display.

(13) The display apparatus according to (7), in which

> the user separation layer is constituted by a barrier element in which slit parts that transmit light and barrier parts that suppress light are alternately arranged, and
> the left and right image separation layer is constituted by a lenticular lens.

(14) The display apparatus according to at least one of (1) to (13), in which
the user separation layer includes a backlight including a plurality of light-emitting regions that forms a stripe pattern and irradiates the display with light from the plurality of light-emitting regions.

(15) The display apparatus according to at least one of (1) to (14), in which

> the user separation layer includes a first stripe pattern for separating the display image,
> the left and right image separation layer includes a second stripe pattern for separating the display image, and
> a direction of the first stripe pattern intersects with a direction of the second stripe pattern as viewed from a direction orthogonal to a display screen of the display.

(16) The display apparatus according to (15), in which

> the display includes a plurality of pixels arranged in a grid form in a vertical direction and a horizontal direction of the display screen, and

the direction of the first stripe pattern is a direction inclined on a same side as the direction of the second stripe pattern with respect to the vertical direction of the display screen.

(17) The display apparatus according to (16), in which

the display includes a plurality of pixels arranged in a grid form along the vertical direction and the horizontal direction of the display screen, and
the direction of the first stripe pattern is a direction inclined on a side opposite to the direction of the second stripe pattern with respect to the vertical direction of the display screen.

(18) The display apparatus according to at least one of (15) to (17), in which

the user separation layer is capable of electrically controlling the direction of the first stripe pattern, and
the processor controls the user separation layer to change the direction of the first stripe pattern on the basis of the user position information.

(19) The display apparatus according to at least one of (15) to (18), in which

the user separation layer is capable of electrically controlling ON or OFF of the first stripe pattern, and
the processor controls the user separation layer so that the first stripe pattern is turned off in a case where the number of users is one.

(20) The display apparatus according to at least one of (1) to (19), in which
the processor switches and executes a plurality of display modes on the basis of the number of users.
(21) The display apparatus according to (20), in which the plurality of display modes includes

a first display mode that generates the image for the right eye of the first user and the image for the left eye of the first user and an image for a right eye of the second user and an image for a left eye of the second user and causes the display to display these images, and
a second display mode that generates the image for the right eye of the first user and the image for the left eye of the first user and a two-dimensional image targeting the second user and causes the display to display these images.

(22) The display apparatus according to (21), in which the processor

executes the second display mode in a case where the number of users is one,
executes the first display mode in a case where the number of users is two.

(23) The display apparatus according to (21), in which the processor

executes the first display mode in a case where the number of users is equal to or smaller than two, and
executes the second display mode in a case where the number of users is equal to or larger than three.

(24) The display apparatus according to at least one of (21) to (23), in which

the plurality of display modes includes a third display mode that generates only a predetermined two-dimensional image and causes the display to display the predetermined two-dimensional image, and
the processor executes the third display mode in a case where the number of users is zero.

(25) The display apparatus according to at least one of (20) to (24), in which
the processor obtains the number of users from the output of the sensor or obtains the number of users from information input via a predetermined input apparatus.

Reference Signs List

1a          first user

| 1b | second user |
|---|---|
| 2 | three-dimensional image |
| 10L | left eye |
| 10R | right eye |
| 16 | barrier element |
| 21 | viewpoint detection camera |
| 22, 22a to 22g | display unit |
| 30, 30s | display |
| 31 | display screen |
| 35 | both-eye separation layer |
| 36 | viewer separation layer |
| 38 | backlight |
| 100 | first display apparatus |

**Claims**

1. A display apparatus, comprising:

   a display;
   a processor configured to

   obtain, from an output of a sensor configured to obtain position information in a real space, user position information including position information of a first user,
   generate an image for a right eye of the first user and an image for a left eye of the first user on a basis of the position information of the first user,
   generate an image for a second user, which is targeting the second user different from the first user, and
   control the display to display a display image including the image for the right eye of the first user, the image for the left eye of the first user, and an image for the second user;

   a user separation layer that is relatively fixed with respect to a surface of the display and is configured to separate the display image into a viewpoint of the first user and a viewpoint of the second user; and
   a left and right image separation layer that is relatively fixed with respect to the surface of the display and is configured to separate the display image into an image for a right eye and an image for a left eye.

2. The display apparatus according to claim 1, wherein
   the processor

   obtains position information of the second user from the output of the sensor, and
   generates an image for a right eye of the second user and an image for a left eye of the second user as the image for the second user on a basis of the position information of the second user.

3. The display apparatus according to claim 1, wherein
   the processor generates a two-dimensional image as the image for the second user.

4. The display apparatus according to claim 3, wherein
   the two-dimensional image is either the image for the right eye of the first user or the image for the left eye of the first user.

5. The display apparatus according to claim 3, wherein
   the two-dimensional image is a center viewpoint image with a viewpoint at a center between the right eye of the first user and the left eye of the first user.

6. The display apparatus according to claim 1, wherein
   the processor generates, on a basis of the user position information, a composite image combining images included in the display image and controls the display to display the composite image.

7. The display apparatus according to claim 1, wherein
   a distance between the display and the left and right image separation layer is larger than a distance between the display and the user separation layer.

8. The display apparatus according to claim 7, further comprising

a backlight that radiates light onto the display, wherein
the display is a see-through-type display that modulates light from the backlight and is arranged between the user separation layer and the left and right image separation layer.

9. The display apparatus according to claim 8, wherein

the user separation layer is arranged between the display and the backlight, and
the left and right image separation layer is arranged on a side opposite to the backlight of the display.

10. The display apparatus according to claim 7, wherein
the user separation layer is arranged between the display and the left and right image separation layer.

11. The display apparatus according to claim 10, further comprising

a backlight that radiates light onto the display, wherein
the display is a see-through-type display that modulates light from the backlight, and
the user separation layer and the left and right image separation layer are arranged between the display and the backlight.

12. The display apparatus according to claim 7, wherein

the display is a self-light-emitting-type display that emits light from a display screen, and
the user separation layer and the left and right image separation layer are arranged on a side of the display screen of the display.

13. The display apparatus according to claim 7, wherein

the user separation layer is constituted by a barrier element in which slit parts that transmit light and barrier parts that suppress light are alternately arranged, and
the left and right image separation layer is constituted by a lenticular lens.

14. The display apparatus according to claim 1, wherein
the user separation layer includes a backlight including a plurality of light-emitting regions that forms a stripe pattern and irradiates the display with light from the plurality of light-emitting regions.

15. The display apparatus according to claim 1, wherein

the user separation layer includes a first stripe pattern for separating the display image,
the left and right image separation layer includes a second stripe pattern for separating the display image, and
a direction of the first stripe pattern intersects with a direction of the second stripe pattern as viewed from a direction orthogonal to a display screen of the display.

16. The display apparatus according to claim 15, wherein

the display includes a plurality of pixels arranged in a grid form in a vertical direction and a horizontal direction of the display screen, and
the direction of the first stripe pattern is a direction inclined on a same side as the direction of the second stripe pattern with respect to the vertical direction of the display screen.

17. The display apparatus according to claim 16, wherein

the display includes a plurality of pixels arranged in a grid form along the vertical direction and the horizontal direction of the display screen, and
the direction of the first stripe pattern is a direction inclined on a side opposite to the direction of the second stripe pattern with respect to the vertical direction of the display screen.

18. The display apparatus according to claim 15, wherein

the user separation layer is capable of electrically controlling the direction of the first stripe pattern, and the processor controls the user separation layer to change the direction of the first stripe pattern on a basis of the user position information.

19. The display apparatus according to claim 15, wherein

the user separation layer is capable of electrically controlling ON or OFF of the first stripe pattern, and the processor controls the user separation layer so that the first stripe pattern is turned off in a case where the number of users is one.

20. The display apparatus according to claim 1, wherein the processor switches and executes a plurality of display modes on a basis of the number of users.

21. The display apparatus according to claim 20, wherein the plurality of display modes includes

a first display mode that generates the image for the right eye of the first user and the image for the left eye of the first user and an image for a right eye of the second user and an image for a left eye of the second user and causes the display to display these images, and a second display mode that generates the image for the right eye of the first user and the image for the left eye of the first user and a two-dimensional image targeting the second user and causes the display to display these images.

22. The display apparatus according to claim 21, wherein the processor

executes the second display mode in a case where the number of users is one, executes the first display mode in a case where the number of users is two.

23. The display apparatus according to claim 21, wherein the processor

executes the first display mode in a case where the number of users is equal to or smaller than two, and executes the second display mode in a case where the number of users is equal to or larger than three.

24. The display apparatus according to claim 21, wherein

the plurality of display modes includes a third display mode that generates only a predetermined two-dimensional image and causes the display to display the predetermined two-dimensional image, and the processor executes the third display mode in a case where the number of users is zero.

25. The display apparatus according to claim 20, wherein the processor obtains the number of users from the output of the sensor or obtains the number of users from information input via a predetermined input apparatus.

100

21

22

1(1b)

1(1a)

20

2

FIG.1

100

21 Viewpoint detection camera

22 Display unit

23 Storage unit

25 Control program

26 Content data

24 Processor

FIG.2

FIG.3

FIG.4

FIG.5

FIG.6

120

122    31    32

30    Display

33

35    Both-eye
separation layer

Y → X

Z

3

1

# FIG.7

124

Viewpoint
detection
unit    150

Right-eye
image
generation unit    151

Output image
generation
unit    153

Display
control unit    154

Left-eye
image
generation unit    152

# FIG.8

| L0 | L1 | L2 | L3 | L4 | L5 | L6 | L7 | L8 | L9 | L10 | L11 | L12 | L13 | Image for left eye (L) |
| R0 | R1 | R2 | R3 | R4 | R5 | R6 | R7 | R8 | R9 | R10 | R11 | R12 | R13 | Image for right eye (R) |

| p0 | p1 | p2 | p3 | p4 | p5 | p6 | p7 | p8 | p9 | p10 | p11 | p12 | p13 | Display |
| L | R | L | R | L | R | L | R | L | R | L | R | L | R | |

d1

Both-eye separation layer

10L 10R

User

Left-eye coordinates $(X_L, Y_L, Z_L,)$
Right-eye coordinates $(X_R, Y_R, Z_R,)$

FIG.9

EP 4 694 113 A1

FIG.10

Processing start

Video frame loop f —— ST101

Detect left-eye coordinates $(X_L, Y_L, Z_L)$ and right-eye coordinates $(X_R, Y_R, Z_R)$ —— ST102

Generate image for left eye $L_{f, XL, YL, ZL}$ and image for right eye $R_{f, XR, YR, ZR}$ —— ST103

Y coordinate loop i —— ST104

X coordinate loop j —— ST105

ST106

Regarding light beam from pixel P(j, i), is incident light amount to left eye of viewer > incident light amount to right eye of viewer?

NO

YES —— ST107

Assign image for left eye L(j, i) to pixel P(j, i)

ST108

Assign image for right eye R(j, i) to pixel P(j, i)

Determine X coordinate loop —— ST109

Determine Y coordinate loop —— ST110

Display output image —— ST111

Determine video frame loop —— ST112

Processing end

FIG.11

FIG.12

FIG.13

EP 4 694 113 A1

Processing start

Video frame loop f — ST201

Detect viewpoint of first user, left-eye coordinates $(X_{aL}, Y_{aL}, Z_{aL})$ and right-eye coordinates $(X_{aR}, Y_{aR}, Z_{aR})$ — ST202

Detect viewpoint of second user, left-eye coordinates $(X_{bL}, Y_{bL}, Z_{bL})$ and right-eye coordinates $(X_{bR}, Y_{bR}, Z_{bR})$ — ST203

Generate image for first user, image for left $aL_f$, XaL, YaL, ZaL and image for right $aR_f$, XaR, YaR, ZaR — ST204

Generate image for second user, image for left $bL_f$, XbL, YbL, ZbL and image for right $bR_f$, XbR, YbR, ZbR — ST205

Y coordinate loop i — ST206

X coordinate loop j — ST207

ST208
Regarding light beam from pixel P(j, i), is incident light amount to region of first user > incident light amount to region of second user?

NO

YES

ST209
Regarding light beam from pixel P(j, i), is incident light amount to left eye of first user > incident light amount to right eye of first user?

NO

ST212
Regarding light beam from pixel P(j, i), is incident light amount to left eye of second user > incident light amount to right eye of second user?

NO

YES — ST210
Assign image for left eye aL(j, i) of first user to pixel P(j, i)

ST211
Assign image for right eye aR(j, i) of first user to pixel P(j, i)

YES — ST213
Assign image for left eye bL(j, i) of second user to pixel P(j, i)

ST214
Assign image for right eye bR(j, i) of second user to pixel P(j, i)

Determine X coordinate loop — ST215

Determine Y coordinate loop — ST216

Display output image — ST217

Determine video frame loop — ST218

Processing end

FIG.14

FIG.15

EP 4 694 113 A1

FIG.16

FIG.17

FIG.18

EP 4 694 113 A1

# FIG.19

# FIG.20

100

For a plurality of persons

100

For one person

36

36

1 1

1

# FIG.21

100

For horizontal separation

100

For vertical separation

Y

Z X

36

36

1 1

1

1

# FIG.22

FIG.23

Processing start

Video frame loop f — ST301

Detect viewpoint of first user, left-eye coordinates $(X_{aL}, Y_{aL}, Z_{aL})$ and right-eye coordinates $(X_{aR}, Y_{aR}, Z_{aR})$ — ST302

Generate image for first user, image for left $aL_{f, XaL, YaL, ZaL}$ and image for right $aR_{f, XaR, YaR, ZaR}$ — ST303

Generate flat image $C(j, i)$ for second user — ST304

Y coordinate loop i — ST305

X coordinate loop j — ST306

Does light beam from pixel $P(j, i)$ equal to or larger than predetermined amount enter region of first user? — ST307

NO

YES

Regarding light beam from pixel $P(j, i)$, is incident light amount to left eye of first user > incident light amount to right eye of first user? — ST308

NO

YES

Assign image for left eye $aL(j, i)$ of first user to pixel $P(j, i)$ — ST309

Assign image for right eye $aR(j, i)$ of first user to pixel $P(j, i)$ — ST310

Assign flat image $C(j, i)$ to pixel $P(j, i)$ — ST311

Determine X coordinate loop — ST312

Determine Y coordinate loop — ST313

Display output image — ST314

Determine video frame loop — ST315

Processing end

FIG.24

FIG.25

FIG.26

## INTERNATIONAL SEARCH REPORT

| | International application No. |
|---|---|
| | **PCT/JP2024/010657** |

### A. CLASSIFICATION OF SUBJECT MATTER

**H04N 13/368**(2018.01)i; **G02B 30/27**(2020.01)i; **G02B 30/30**(2020.01)i; **H04N 13/31**(2018.01)i; **H04N 13/305**(2018.01)i; **H04N 13/356**(2018.01)i

FI: H04N13/368; H04N13/31; H04N13/305; H04N13/356; G02B30/30; G02B30/27

According to International Patent Classification (IPC) or to both national classification and IPC

### B. FIELDS SEARCHED

Minimum documentation searched (classification system followed by classification symbols)

H04N13/30-13/398; G02B30/00-30/60; G02B27/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-148638 A (KYOCERA CORPORATION) 05 September 2019 (2019-09-05) paragraphs [0012]-[0061], fig. 1-11 | 1-11, 14 |
| Y | | 12-13, 20-25 |
| A | | 15-19 |
| X | US 2011/0159929 A1 (BROADCOM CORPORATION) 30 June 2011 (2011-06-30) paragraphs [0105]-[0180] | 1-7, 10, 12-13 |
| Y | | 12-13, 20-25 |
| A | | 8-9, 11, 14-19 |
| Y | JP 2014-123130 A (JAPAN DISPLAY INC.) 03 July 2014 (2014-07-03) paragraph [0024] | 20-25 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/010657**

| Patent document cited in search report | | | Publication date (day/month/year) | Patent family member(s) | | | Publication date (day/month/year) |
|---|---|---|---|---|---|---|---|
| JP | 2019-148638 | A | 05 September 2019 | WO | 2019/163817 | A1 | |
| US | 2011/0159929 | A1 | 30 June 2011 | EP | 2357631 | A1 | |
| | | | | CN | 102183841 | A | |
| JP | 2014-123130 | A | 03 July 2014 | (Family: none) | | | |

Form PCT/ISA/210 (patent family annex) (July 2022)

**EP 4 694 113 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021516517 A
- JP 2015515165 A
- JP 2012010086 A